(19) Europäisches Patentamt
European Patent Office
Office européen des brevets

(11) EP 4 299 339 B1

(12) # EUROPEAN PATENT SPECIFICATION

(45) Date of publication and mention of the grant of the patent:
**17.09.2025 Bulletin 2025/38**

(21) Application number: **23178388.7**

(22) Date of filing: **09.06.2023**

(51) International Patent Classification (IPC):
***B60C 1/00*** *(2006.01)* ***B60C 11/00*** *(2006.01)*
***B60C 11/11*** *(2006.01)* ***B60C 11/12*** *(2006.01)*
***B60C 11/03*** *(2006.01)*

(52) Cooperative Patent Classification (CPC):
**B60C 1/0016; B60C 11/005; B60C 11/11; B60C 11/1259;** B60C 2011/0346; B60C 2011/0353; B60C 2011/1209; B60C 2011/1254; B60C 2200/06

(54) **HEAVY-DUTY TIRE**

SCHWERLASTREIFEN

PNEU POUR POIDS LOURDS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **01.07.2022 JP 2022107310**

(43) Date of publication of application:
**03.01.2024 Bulletin 2024/01**

(73) Proprietor: **Sumitomo Rubber Industries, Ltd.**
**Kobe-shi, Hyogo 651-0072 (JP)**

(72) Inventor: **GONDO, Satoshi**
**Kobe-shi, Hyogo 651-0072 (JP)**

(74) Representative: **Manitz Finsterwald**
**Patent- und Rechtsanwaltspartnerschaft mbB**
**Martin-Greif-Straße 1**
**80336 München (DE)**

(56) References cited:
**EP-A1- 3 960 492**
**EP-A2- 0 540 340**
**JP-A- H05 254 314**
**US-A1- 2010 224 295**
**US-A1- 2019 118 581**
**US-A1- 2021 178 828**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 299 339 B1

## Description

TECHNICAL FIELD

The present invention relates to a heavy-duty tire.

BACKGROUND OF THE INVENTION

Chipping means a phenomenon where a part of a rubber forming a surface layer part of a tread peels off in a scale shape. During running, a surface of the tread comes into contact with a road surface, whereby a part of the rubber of the tread surface suffers from a crack (initial crack). When shear stress occurring during turning or during sudden braking concentrates on this crack, the crack develops, and chipping occurs. JP 2009-96919 A describes a rubber composition for tread having chipping resistance with a predetermined compounding. US 2021/178828 A1 discloses a tire for a heavy-duty vehicle wherein the tread is made up of an external layer and an internal layer, the rubber composition of the external layer comprises natural rubber, carbon black and silica, and circumferential grooves and a plurality of sipes are formed in the external layer. A heavy-duty tire according to the preamble of claim 1 is known from JP H05-254314 A. In EP 0 540 340 A2, a pneumatic tire is described wherein there is an upper layer and a lower layer in the tread, the tire comprising circumferential main grooves and blocks, wherein sipes formed in the upper layer are arranged in the blocks.

SUMMARY OF THE INVENTION

It is an object of the present invention to improve chipping resistance of a heavy-duty tire on a surface of a rough road.

The present invention relates to the following heavy-duty tire:

A heavy-duty tire comprising a tread part,
wherein the tread part comprises

- a first layer constituting a tread surface, and
- a second layer located inside the first layer,

wherein the tread surface comprises

- a plurality of main grooves extending continuously in a tire circumferential direction,
- lateral grooves extending from the plurality of main grooves in a tire axial direction, and
- blocks partitioned off by the main grooves and the lateral grooves,

wherein each of the blocks comprises a sipe,
wherein, when a depth (mm) of the sipe is referred to as D and a thickness (mm) of the first layer is referred to as H, D and H satisfy the following inequality,

$$D / H \leq 0.95 \qquad (1),$$

and
wherein a rubber composition constituting the first layer comprises

- a rubber component comprising an isoprene-based rubber,
- a filler comprising carbon black and silica, and
- a resin component.

According to the present invention, chipping resistance of a heavy-duty tire on a surface of a rough road can be improved.

BRIEF DESCRIPTION OF THE DRAWINGS

FIG. 1 is a cross-sectional view of a tire according to one embodiment of the present invention on a plane including a tire rotation axis.

FIG. 2 is a plan view showing a tread surface and a tread grounding surface of the tire according to one embodiment of the present invention. The surrounded area in FIG. 2 is the tread grounding surface.

FIG. 3 is a plan view showing a tread grounding surface in the tire according to one embodiment of the present invention. The surrounded area in FIG. 3 is the tread grounding surface.

DETAILED DESCRIPTION

The present invention will be described below. However, the following descriptions are illustrative for explaining the present invention, and are not intended to limit the technical scope of the present invention to this description.

A heavy-duty tire according to the present invention is a heavy-duty tire comprising a tread part, wherein the tread part comprises a first layer constituting a tread surface, and a second layer located inside the first layer, wherein the tread surface comprises a plurality of main grooves extending continuously in a tire circumferential direction, lateral grooves extending from the plurality of main grooves in a tire axial direction, and blocks partitioned off by the main grooves and the lateral grooves, wherein each of the blocks comprises a sipe, wherein, when a depth (mm) of the sipe is referred to as D and a thickness (mm) of the first layer is referred to as H, D and H satisfy the following inequality,

$$D / H \leq 0.95 \quad (1),$$

and wherein a rubber composition constituting the first layer comprises a rubber component comprising an isoprene-based rubber, a filler comprising carbon black and silica, and a resin component.

A mechanism by which the heavy-duty tire according to the present invention can achieve improvement in chipping resistance on a surface of a rough road is considered as follows, although the following consideration is not intended to be bound by any theory. That is, (1) compounding an isoprene-based rubber (IR-based rubber) in the rubber composition constituting the tread surface strengthens resistance against deformation and chipping of the tread surface and deformation of all pattern blocks, (2) making a depth of the sipe equal to or less than a predetermined value relative to a thickness of the first layer of the tread in order for the sipe to remain within the first layer without passing through an interface of rubber layers enables the rubber to flexibly deform in the pattern blocks and to be less likely to chip off, and (3) by a combination use of carbon black and silica, carbon black can reduce an amount of deformation of the rubber, and silica can improve elongation at break of the rubber, so that it is considered that carbon black and silica contribute to improvement of chipping resistance. Then, with cooperation of these (1) to (3), it is considered that fracture characteristics of the rubber composition of the first layer are improved and flexibility of the rubber for deformation are improved, whereby fracture becomes less likely to occur and chipping resistance can be improved.

The right side of the above-described inequality (1) is preferably 0.80.

This is because it is considered that, when a point of origin of deformation of a sipe part is kept away from the interface of the first layer, chipping resistance is further improved.

The above-described carbon black preferably comprises carbon black having an average primary particle size of 19 nm or less.

This is because it is considered that reinforcing property of the rubber composition by carbon black is improved and chipping resistance is further improved.

A content of the carbon black having an average primary particle size of 19 nm or less in the entire carbon black is preferably 100% by mass.

This is because it is considered that reinforcing property of the rubber composition by such carbon black is improved and chipping resistance is further improved.

When a content (part by mass) of the carbon black based on 100 parts by mass of the rubber component in the rubber composition constituting the first layer is referred to as $A_1$ and a content (part by mass) of the silica based on 100 parts by mass of the rubber component in the rubber composition constituting the first layer is referred to as $B_1$, $A_1$ and $B_1$ preferably satisfy the following inequality,

$$B_1 / (A_1 + B_1) < 0.50 \quad (2).$$

A ratio of silica to a total amount of carbon black and silica that are fillers becomes less than half of the total amount in the case where the above-described inequality (2) is satisfied, so that poor dispersion of silica is suppressed, and it is considered that it is easy to exert an effect of combination use of carbon black and silica on chipping resistance.

The right side of the above-described inequality (2) is preferably 0.20.

It is considered that it is easy to exert an effect of combination use of carbon black and silica on chipping

resistance.

The rubber composition constituting the first layer further comprises a resin component.

When the rubber composition further comprises a resin component, it becomes easier to convert impact or the like into heat, and thus it is considered that chipping resistance is improved.

The rubber composition constituting the first layer further comprises sulfur, and a content of sulfur based on 100 parts by mass of the rubber component is preferably 2.00 parts by mass or less. Here, the "content of sulfur" is an amount which will be defined later.

When the content of sulfur is suppressed, the rubber can reserve a room for deterioration even at the last stage of abrasion, which is considered to contribute to chipping resistance.

When a content (part by mass) of the carbon black based on 100 parts by mass of the rubber component in the rubber composition constituting the first layer is referred to as $A_1$ and a land ratio (%) of the tread surface of the tread part is referred to as C, $A_1$ and C preferably satisfy the following inequality,

$$A_1 \times C / 1000 > 3.00 \quad (3).$$

It is considered that both of the land ratio and the content of carbon black act such that the rigidity of the tread is increased and deformation is suppressed. Accordingly, it is considered that, when a product of them is set to be equal to or greater than a certain value, deformation on the tread surface is suppressed and a good chipping resistance is achieved.

When a content (part by mass) of the carbon black based on 100 parts by mass of the rubber component in the rubber composition constituting the first layer is referred to as $A_1$, $A_1$ and the above-described D/H preferably satisfy the following inequality,

$$A_1 / (D/H) > 250 \quad (4).$$

The greater the content $A_1$ of carbon black in the first layer is, the more the rigidity is increased. On the other hand, the less the D/H is, the more the point of origin of deformation in deformation of the sipe part is kept away from the boundary of the first layer, which contributes to improvement of chipping resistance. Accordingly, it is considered that harmonizing a product of them at a value equal to or greater than a certain value contributes to improvement of chipping resistance.

It is preferable that: the number of the main grooves is three or more; when a pair of main grooves on the outermost sides in the tire width direction among the main grooves are defined as shoulder main grooves and the other main grooves are defined as center main grooves, a groove width (mm) $GW_{SH}$ of a shoulder main groove having a minimum groove width among the shoulder main grooves and a groove width (mm) $GW_{CE}$ of a center main groove having a maximum groove width among the center main grooves satisfy the following inequality,

$$GW_{CE} / GW_{SH} < 1.00 \quad (5),$$

and when land parts on the outside in the tire width direction being partitioned off by the pair of shoulder main grooves are referred to as a pair of shoulder land parts, $W_{SH}$ that is a total (mm) of maximum values of grounding widths of the shoulder land parts and TW that is a tread grounding width (mm) satisfy the following inequality,

$$W_{SH} / TW < 0.50 \quad (6).$$

When the groove widths of the center main grooves are set to be narrower than the groove widths of the shoulder main grooves, it becomes easy for the shoulder land parts to come into contact with the ground, and it is considered that a force that the tread receives per unit area on the grounding surface can be decreased. Moreover, when the shoulder main grooves are provided on the outside in the tire width direction so that the grounding widths of the shoulder land parts are less than half of the tread grounding width, it becomes easy for the tread part to deform in a radial direction in the vicinity of the shoulder parts for which it is difficult to come into contact with the ground, and it is considered that grounding performance can be easily improved. Accordingly, grounding performance is improved and the force that the tread surface receives from a road surface can be decreased, which is thus considered to contribute to improvement of chipping resistance.

A rubber hardness at 23°C of the rubber composition constituting the first layer is preferably 62 to 72.

When a range of the hardness is controlled, it is considered that an appropriate chipping resistance can be secured.

It is preferable that: each of the blocks comprises a shallow groove having a groove depth shallower than the groove depths of the main grooves; the shallow groove being open to at least one of the main grooves and the lateral

grooves that are adjacent to the blocks.

When such shallow grooves as described above are provided, mud is prevented from remaining in the tread, which is thus considered to contribute to improvement of chipping resistance.

When a content (part by mass) of the carbon black based on 100 parts by mass of the rubber component in the rubber composition constituting the first layer is referred to as $A_1$, a rubber composition constituting the second layer comprises a rubber component comprising an isoprene-based rubber and a filler comprising carbon black, and a content (part by mass) of the carbon black based on 100 parts by mass of the rubber component in the rubber composition constituting the second layer is referred to as $A_2$, $A_1$ and $A_2$ preferably satisfy the following inequality,

$$A_2 / A_1 < 1.00 \qquad (7)$$

(provided that $A_2$ is 20 or more).

When a concentration gradient is provided in the content of carbon black, it becomes easier for the tread layers consisting of at least two layers to absorb impact, which is considered to contribute to improvement of chipping resistance.

When a content (part by mass) of the silica based on 100 parts by mass of the rubber component in the rubber composition constituting the first layer is referred to as $B_1$, the rubber composition constituting the second layer comprises a rubber component comprising an isoprene-based rubber and a filler comprising silica, and a content (part by mass) of the silica based on 100 parts by mass of the rubber component in the rubber composition constituting the second layer is referred to as $B_2$, $B_1$ and $B_2$ preferably satisfy the following inequality,

$$B_2 / B_1 < 1.00 \qquad (8)$$

(provided that $B_2$ is 3 or more).

When a concentration gradient is provided in the content of silica, it becomes easier for the tread layers consisting of at least two layers to absorb impact, which is considered to contribute to improvement of chipping resistance.

[Definition]

A "standardized state" means a state in which a tire is rim-assembled to a standardized rim, filled with air at a standardized internal pressure, and applied with no load.

A "standardized rim" is a rim, in a standard system including a standard on which the tire is based, defined for each tire by the standard. The standardized rim refers to, for example, a "standard rim" in applicable sizes described in "JATMA YEAR BOOK" in JATMA (Japan Automobile Tyre Manufacturers Association, Inc), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.). JATMA, ETRTO, and TRA are referred to in this order, and when an applicable size is found during reference to the standard, a standardized rim is based on that standard. Additionally, if the tire is not defined in the above-described standard system, the "standardized rim" refers to a rim having the smallest rim diameter and secondly having the narrowest rim width among rims that can be rim-assembled to the tire and retain internal pressure, that is, rims that do not cause air leakage between the rim and the tire.

A "standardized internal pressure" is an air pressure, in a standard system including a standard on which the tire is based, defined for each tire by the standard. The standardized internal pressure refers to, for example, the "MAXIMUM AIR PRESSURE" in JATMA, "INFLATION PRESSURE" in ETRTO, or the "maximum value" described in the table "TIRE LOAD LIMITS AT VARIOUS COLD INFLATION PRESSURES" in TRA. Like the standardized rim, JATMA, ETRTO, and TRA are referred to in this order, and when an applicable size is found during reference to the standard, a standardized internal pressure is based on that standard. Additionally, in a case of a tire whose size is not defined in the standard system, the standardized internal pressure refers to a standardized internal pressure for another tire size that is defined by a standard of the standard system, for which tire size the above standardized rim is described as a standard rim, provided, however, that the standardized internal pressure is 250 kPa or more. Besides, in a case where a plurality of standardized internal pressures of 250 kPa or more are described, the standardized internal pressure refers to the minimum value among them.

A "standardized load" is a load, in a standard system including a standard on which the tire is based, defined for each tire by the standard. The "MAXIMUN LOAD CAPACITY" in JATMA, "LOAD CAPACITY" in ETRTO and the "maximum value" described in the table "TIRE LOAD LIMITS AT VARIOUS COLD INFLATION PRESSURES" in TRA are standardized loads. Like the standardized rim and the standardized internal pressure, JATMA, ETRTO, and TRA are referred to in this order, and when an applicable size is found during reference to the standard, a standardized load is based on that standard. Additionally, in a case of a tire whose size is not defined in the standard, the standardized load WL (kg) is calculated as follows,

$$WL = 0.000011 \times V + 175,$$

$$V = \{(Dt/2)^2 - (Dt/2 - Ht)^2\} \times \pi \times Wt,$$

where V represents a virtual volume of the tire ($mm^3$), Dt represents a tire outer diameter Dt (mm), Ht represents a height of a cross section of the tire (mm), and Wt represents a width of the cross section of the tire (mm).

A "content of sulfur" refers to an amount of sulfur elements based on 100 parts by mass of a rubber component in a rubber composition. The amount of sulfur elements includes an amount of sulfur elements contained in a vulcanizing agent, and amounts of sulfur elements contained in a vulcanization accelerator, a coupling agent, and the like. The "amount of sulfur elements based on 100 parts by mass of a rubber component" is calculated as a percent by mass from an "amount of the rubber component (PC amount (% by mass))" and an "amount of total sulfur (TS amount (% by mass))" contained in the rubber composition as measured by predetermined methods by a formula, "TS amount ÷ PC amount × 100".

A "main groove" refers to a groove extending continuously in a tire circumferential direction on a tread surface, each having a groove width greater than 2.0 mm, and includes a shoulder main groove and a center main groove. The "shoulder main groove" is one of a pair of main grooves located on the outermost sides in a tire width direction. The "center main groove" is a main groove other than the shoulder main grooves.

A "Groove width of main groove" is a width (mm) of a main groove in a tire rotation axis direction on the tread surface and is measured in a standardized state. In a case where the groove width of the main groove varies along the tire circumferential direction, the groove width can be calculated by dividing a total of groove area of the main groove by a tire circumferential length. Besides, when the total of groove area of the main groove is calculated, the groove area of the main groove shall be recognized by connecting ends of blocks adjacent to one another in a circumferential direction with a straight line. "$GW_{SH}$" is a groove width of a shoulder main groove having a minimum groove width. "$GW_{CE}$" is a groove width of a center main groove having a maximum groove width.

A "Lateral groove" is a groove extending from a main groove in a tire axial direction. The lateral groove links main grooves adjacent to one another to form a block.

A "block" is an area on the tread which is partitioned off by the main grooves and the lateral grooves. A block includes, for example, (1) a block formed with two main grooves adjacent to each other and two lateral grooves that connect the two main grooves and are adjacent to each other, as well as (2) a block formed with one shoulder main groove and two lateral grooves that extend from this shoulder main groove outward in the tire width direction and are adjacent to each other. The block in the above-described case (1) is referred to as "center block", and the blocks in the above-described case (2) is referred to as "shoulder blocks". In the shoulder block, the ends on the tread grounding end-side of two lateral grooves adjacent to each other may or may not reach to tread grounding ends. Moreover, in a case where the ends on the tread grounding end of the two lateral grooves adjacent to each other do not reach to the tread grounding ends, these ends may or may not communicate with each other.

A "sipe" refers to a narrow notch having a width of 2.0 mm or less, preferably 0.5 to 2.0 mm. The sipe is formed on a block.

A "thickness (H) of a first layer constituting the tread surface" is a thickness (mm) of a first layer constituting the tread surface at a position of a middle point of a sipe and is measured in a state where a tire is held at a standardized rim width after cutting the tire along a plane including the tire rotation axis. The thickness of the first layer is a thickness for which the sipe is recognized as one that is filled. The middle point of the sipe is a point on the tread surface where a distance from one end of the sipe is equal to a distance from the other end of the sipe.

A "depth (D) of each sipe" is a depth (mm) of the sipe from the tread surface at the middle point of the sipe and is measured in the state where a tire is held at a standardized rim width after cutting the tire along a plane including the tire rotation axis.

A "land ratio" is a ratio (%) of an area of a grounding surface of a tread, the grounding surface of a tread being under the condition where a standardized load is applied on a tire in a standardized state, excluding areas of grooves and sipes existing in the grounding surface to a total area of the grounding surface in which all of the grooves and the sipes existing in the grounding surface are filled. For example, a part enclosed by an enclosure line in FIG. 2 represents a grounding surface of a tread under the condition where a standardized load is applied on a tire that is in a standardized state. Therefore, the ratio (%) of the area of the grounding surface excluding the areas of the grooves and the sipes existing in the grounding surface to the total area of the grounding surface in which all of the grooves and the sipes existing in the grounding surface are filled becomes the land ratio.

A "tread grounding width (TW)" is a maximum distance in a width direction of the tread grounding surface.

A "total of grounding widths of shoulder land parts ($W_{SH}$)" is a total (mm) of maximum values of grounding widths of the pair of shoulder land parts in the tire axial direction in an area within the tread grounding width (TW) (FIG. 2).

A "shallow groove" is a groove that is formed on a block and that has a groove depth shallower than the groove

depths of the main grooves. The shallow groove is open to at least one of the main grooves and the lateral grooves partitioning off the block.

[Measuring method]

A "styrene content" is calculated by $^1$H-NMR measurement

A "vinyl content (1,2-bond butadiene unit amount)" is measured according to JIS K 6239-2:2017.

A "weight-average molecular weight (Mw)" can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

A "cis content (cis-1,4-bond butadiene unit amount)" is measured according to JIS K 6239-2:2017.

An "average primary particle size of carbon black" can be calculated by measuring 400 or more primary particles observed in the field of view with a transmission electron microscope and averaging them.

A "$N_2$SA of carbon black" is a value calculated according to JIS K 6217-2:2017.

A "$N_2$SA of silica" is a value measured by a BET method according to ASTM D3037-93.

"Rubber hardness" is a value measured in such a way that a sample for measuring hardness is prepared by being cut out from the tread part forming a grounding surface so that a tire radial direction became a thickness direction and a type A durometer is pressed against the sample from the grounding surface side at 23°C according to JIS K 6253.

Unless otherwise noted, a "softening point" is a temperature at which a sphere drops when the softening point specified in JIS K 6220-1: 2015 is measured with a ring and ball softening point measuring device. In a case where the softening point is measured by another method, a notice to that effect will be given.

An "amount of total sulfur" is an amount of sulfur elements (TS amount (% by mass)) relating to calculation of the above-described content of sulfur and is measured in percent by mass for a test piece cut out from a tread of a test tire by an oxygen combustion flask method according to JIS K 6233.

An "amount of a rubber component" is an amount of a rubber component (PC amount (% by mass)) relating to calculation of the above-described content of sulfur and is a weight loss content (mass (%)) measured when a test piece cut out from a tread of a test tire is set to a Soxhlet extractor, acetone extraction is performed under a condition where a mass of test piece is 10 g or less, a volume of acetone is 150 ml, a temperature of a thermostatic bath is 95 to 100°C, and an extraction time is 72 hours, and, for the test piece subjected to the acetone extraction, an organic matter is pyrolyzed and vaporized according to JIS K 6226-1:2003 by heating of the test piece under a nitrogen atmosphere (with a rise from a room temperature to 750°C).

[Tire]

The heavy-duty tire of the present invention will be described below by appropriately using the drawings. However, the drawings are merely for illustration.

The heavy-duty tire of the present invention is a heavy-duty tire comprising a tread part, where the tread part comprises a first layer constituting a tread surface, and a second layer located inside the first layer, wherein the tread surface comprises a plurality of main grooves extending continuously in a tire circumferential direction, lateral grooves extending from the plurality of main grooves in a tire axial direction, and blocks partitioned off by the main grooves and the lateral grooves, wherein each of the blocks comprises a sipe, and wherein, when a depth (mm) of the sipe is referred to as D and a thickness (mm) of the first layer is referred to as H, D and H satisfy the following inequality,

$$D / H \leq 0.95 \qquad (1).$$

FIG. 1 is a cross-sectional view of a heavy-duty tire according to one embodiment of the present invention on a plane including a tire rotation axis. A tire 1 of FIG. 1 comprises a tread 3 that comprises a first layer 4 constituting a tread surface 2 and a second layer 5 located inside the first layer. The tread surface 2 has four main grooves that extend continuously in a tire circumferential direction. Among these main grooves, a pair of main grooves on the outermost sides in a tire width direction are represented by shoulder main grooves 8, and two main grooves other than the shoulder main grooves are represented by center main grooves 7.

FIG. 2 is a plan view showing a tread surface and a tread grounding surface of the heavy-duty tire according to one embodiment of the present invention. The surrounded area in FIG. 2 is the tread grounding surface. TW indicates a tread grounding width. The tread surface of FIG. 2 has two center main grooves 7, two shoulder main grooves 8, and lateral grooves 9 communicating with the main grooves. Blocks 10 consist of a center block partitioned off by adjacent two main grooves of the center main grooves 7 and the shoulder main grooves 8 and two lateral grooves 9 adjacent to each other in a

circumferential direction, and a shoulder block partitioned off by one shoulder main groove 8 and two lateral grooves 9 adjacent to each other in the circumferential direction. Each of the center blocks and the shoulder blocks has two sipes 11. $GW_{SH}$ indicates a groove width of a shoulder main groove having a minimum groove width among the shoulder main grooves, and $GW_{CE}$ indicates a groove width of a center main groove having a maximum groove width among the center main grooves. In FIG. 2, $GW_{CE}$ is narrower than $GW_{SH}$. Moreover, in FIG. 2, $W_{SH}$ is a total (mm) of maximum values of grounding widths of the pair of shoulder land parts in a tire axial direction in an area within a tread grounding width (TW).

FIG. 3 is a plan view showing a tread surface and a tread grounding surface in the heavy-duty tire according to one embodiment of the present invention. The surrounded area in FIG. 3 is the tread grounding surface. FIG. 3 is different from FIG. 2 in the number of sipes that each center block (block 10) has and in pattern of grooves. That is, the center block of FIG. 3 comprises one sipe 11 and shallow grooves 12. The shallow grooves 12 consist of: a groove having a groove depth shallower than the groove depth of adjacent center main groove 7 and being open to the adjacent center main groove 7; and a groove having a groove depth shallower than the groove depths of adjacent shoulder main groove 8 and being open to the adjacent shoulder main groove 8.

<Main grooves>

Each of the main grooves may be not only in a zigzag shape but also in a linear shape. For example, in FIG. 2 or 3, all the main grooves extending continuously in the tire circumferential direction extend in a zigzag shape while oscillating in the tire width direction. Here, the zigzag shape is intended to be in a shape in which the center of main groove in the width direction extends in the tire circumferential direction while oscillating in the tire width direction. Accordingly, examples of the zigzag shape include not only a shape in which a groove in a linear shape repeatedly bends but also a shape in which a curved groove repeatedly curves in a wavy shape.

The number of the main grooves is two or more. In a case where the number of the main grooves is two, these two main grooves are a pair of the shoulder main grooves. In a case where the number of the main grooves is three or more, the number of the center main grooves increases in accordance with an increase in the number of the main grooves. All FIGS. 1 to 3 show examples in which the number of the main grooves is four. The number of the main grooves may be five, or six or more.

<Lateral grooves>

The lateral grooves extend from the main grooves in the tire axial direction and, together with the main grooves, partition the blocks off. An angle of each lateral groove with respect to the tire axial direction is, but not particularly limited to, for example, preferably 3° or more and 7° or less.

<Blocks and sipes>

The main grooves and the lateral grooves partition the blocks off, and each of the blocks comprises a sipe. As described above, a depth D (mm) of each sipe is equal to or less than a predetermined value relative to the thickness H (mm) of the first layer. The number of sipes that each block has is not particularly limited, and the optimum number of sipes may be determined depending on a shape of the block, an area of the block, a length of a sipe, and the like. In FIG. 2, each block comprises two sipes. In FIG. 3, each shoulder block comprises two sipes, and each center block comprises one sipe.

<Tread part>

The tread part comprises the first layer constituting the tread surface, and the second layer located inside the first layer. A thickness of the first layer is preferably greater than 12 mm, more preferably greater than 14 mm, further preferably greater than 16 mm. On the other hand, the thickness of the first layer is preferably less than 24 mm, more preferably less than 22 mm, further preferably less than 20 mm. Moreover, a thickness of the second layer is preferably greater than 2.0 mm, more preferably greater than 3.0 mm, further preferably greater than 4.0 mm. On the other hand, the thickness of the second layer is preferably less than 8.0 mm, more preferably less than 7.0 mm, further preferably less than 6.0 mm.

The heavy-duty tire of the present invention may be one further comprising a middle layer in addition to the first and second layers. Such a middle layer may be one located, as a layer having a compounding formulation similar to that of the first layer, inside the first layer or may be one located, as a layer having a compounding formulation similar to that of the second layer, outside the second layer. Alternatively, the middle layer may be one located, as a layer having a compounding formulation different from those of the first and second layers, between the first and second layers. Moreover, the middle layer may be one consisting of two or more layers in addition to a case where it consists of one layer.

<Rubber hardness>

A rubber hardness at 23°C of the rubber composition constituting the first layer is preferably 62 or more and 72 or less. The rubber hardness is preferably greater than 62, more preferably greater than 64, further preferably greater than 65. On the other hand, the rubber hardness is preferably less than 72, more preferably less than 69, further preferably 68 or less, further preferably 67 or less, further preferably less than 67.

The rubber hardness of the rubber composition can be adjusted by a conventional method in the tire industry. Specifically, the rubber hardness can be adjusted by changing a type or an amount of a chemical compounded in the rubber composition (for example, a rubber component, a filler, a softening agent, sulfur, a vulcanization accelerator, a silane coupling agent, or the like). For example, the rubber hardness can be decreased by increasing a content of oil, and conversely, the rubber hardness can be increased by decreasing the content of oil. Therefore, a person skilled in the art can adjust the rubber hardness appropriately.

<Inequality (1)>

When the depth (mm) of each sipe is referred to as D and the thickness (mm) of the first layer is referred to as **H,** D and H satisfy the following inequality,

$$D / H \leq 0.95 \qquad (1).$$

The right side of the inequality (1) is preferably 0.90, more preferably 0.87, further preferably 0.80, further preferably 0.70, further preferably 0.60, further preferably 0.50, further preferably 0.40, further preferably 0.30, further preferably 0.20, further preferably 0.12. On the other hand, a lower limit of D/H is, but not particularly limited to, usually, preferably greater than 0.05, more preferably greater than 0.07, further preferably greater than 0.10.

<Inequality (2)>

When a content (part by mass) of the carbon black based on 100 parts by mass of the rubber component in the rubber composition constituting the first layer is referred to as $A_1$ and a content (part by mass) of the silica based on 100 parts by mass of the rubber component in the rubber composition constituting the first layer is referred to as $B_1$, $A_1$ and $B_1$ preferably satisfy the following inequality,

$$B_1 / (A_1 + B_1) < 0.50 \qquad (2).$$

The right side of the inequality (2) is preferably 0.45, more preferably 0.40, further preferably 0.35, further preferably 0.20, further preferably 0.18. On the other hand, a lower limit of $B_1/(A_1 + B_1)$ is, but not particularly limited to, usually, preferably greater than 0.05, more preferably greater than 0.07, further preferably greater than 0.10.

<Inequality (3)>

When the content (part by mass) of the carbon black based on 100 parts by mass of the rubber component in the rubber composition constituting the first layer is referred to as $A_1$ and a land ratio (%) of the tread surface of the tread part is referred to as C, $A_1$ and C preferably satisfy the following inequality,

$$A_1 \times C / 1000 > 3.00 \qquad (3).$$

The right side of the inequality (3) is preferably 3.20, more preferably 3.30, further preferably 3.40. On the other hand, an upper limit of $A_1 \times C/1000$ is, but not particularly limited to, usually, preferably less than 9.00, more preferably less than 7.00, further preferably less than 5.00.

Moreover, the land ratio (%) C is preferably greater than 60%, more preferably greater than 65%, further preferably greater than 70%, further preferably greater than 75%. Moreover, the C is preferably less than 90%, more preferably less than 85%.

<Inequality (4)>

When the content (part by mass) of the carbon black based on 100 parts by mass of the rubber component in the rubber composition constituting the first layer is referred to as $A_1$, $A_1$ and the above-described D/H preferably satisfy the

following inequality,

$$A_1 / (D / H) > 250 \quad (4).$$

The right side of the inequality (4) is preferably 275, more preferably 300, further preferably 350. On the other hand, an upper limit of $A_1$/(D/H) is, but not particularly limited to, usually, preferably less than 1000, more preferably less than 700, further preferably less than 500.

<Inequality (5)>

The groove width (mm) $GW_{SH}$ of the shoulder main groove having the minimum groove width among the above-described shoulder main grooves and the groove width GWc of the center main groove having the maximum groove width among the above-described center main grooves preferably satisfy the following inequality,

$$GW_{CE} / GW_{SH} < 1.00 \quad (5).$$

The right side of the inequality (5) is preferably 0.95, more preferably 0.90, further preferably 0.85, further preferably 0.80, further preferably 0.76, further preferably 0.70, further preferably 0.65, further preferably 0.61. On the other hand, a lower limit of $GW_{CE}/GW_{SH}$ is, but not particularly limited to, usually, preferably greater than 0.20, more preferably greater than 0.40, further preferably greater than 0.50.

<Inequality (6)>

When the land parts on the outside in the tire width direction which land parts are partitioned off by the pair of shoulder main grooves are referred to as a pair of shoulder land parts, $W_{SH}$ that is a total (mm) of maximum values of grounding widths of the shoulder land parts and TW that is a tread grounding width (mm) preferably satisfy the following inequality,

$$W_{SH} / TW < 0.50 \quad (6).$$

The right side of the inequality (6) is preferably 0.49, more preferably 0.48, further preferably 0.47, further preferably 0.46, further preferably 0.45, further preferably 0.44, further preferably 0.43, further preferably 0.42, further preferably 0.41. On the other hand, a lower limit of $W_{SH}$/TW is, but not particularly limited to, usually, preferably greater than 0.35, more preferably greater than 0.37, further preferably greater than 0.39.

<Inequality (7)>

When the content (part by mass) of the carbon black based on 100 parts by mass of the rubber component in the rubber composition constituting the first layer is referred to as $A_1$ and the content (part by mass) of the carbon black based on 100 parts by mass of the rubber component in the rubber composition constituting the second layer is referred to as $A_2$, $A_1$ and $A_2$ preferably satisfy the following inequality,

$$A_2 / A_1 < 1.00 \quad (7)$$

(provided that $A_2$ is 20 or more).

The right side of the inequality (7) is preferably 0.95, more preferably 0.90, further preferably 0.86. On the other hand, a lower limit of $A_2$/ $A_1$ is, but not particularly limited to, usually, preferably greater than 0.50, more preferably greater than 0.60, further preferably greater than 0.70.

<Inequality (8)>

When the content (part by mass) of the silica based on 100 parts by mass of the rubber component in the rubber composition constituting the first layer is referred to as $B_1$ and the content (part by mass) of the silica based on 100 parts by mass of the rubber component in the rubber composition constituting the second layer is referred to as $B_2$, $B_1$ and $B_2$ preferably satisfy the following inequality,

$$B_2 / B_1 < 1.00 \quad (8)$$

(provided that $B_2$ is 3 or more).

The right side of the inequality (8) is preferably 0.90, more preferably 0.80, further preferably 0.70, further preferably 0.60, further preferably 0.50, further preferably 0.40, further preferably 0.30, further preferably 0.21. On the other hand, a lower limit of $B_2/B_1$ is, but not particularly limited to, usually, preferably greater than 0.10, more preferably greater than 0.15, further preferably greater than 0.18.

[Rubber composition]

The rubber composition constituting the first layer of the tread part of the heavy-duty tire of the present invention (rubber composition of the present invention) will be described below. The rubber composition of the present invention comprises a rubber component comprising an isoprene-based rubber, and a filler comprising carbon black and silica.

<Rubber component>

The rubber component comprises an isoprene-based rubber.

(Isoprene-based rubber)

As an isoprene-based rubber, for example, those common in the tire industry can be used, such as an isoprene rubber (IR), a natural rubber, and the like. Examples of the natural rubber include not only a non-modified natural rubber (NR) but also a modified natural rubber such as an epoxidized natural rubber (ENR), a hydrogenated natural rubber (HNR), a deproteinized natural rubber (DPNR), an ultra pure natural rubber, a grafted natural rubber, and the like. Among them, the natural rubber is preferable, and the non-modified natural rubber (NR) is more preferable. These isoprene-based rubbers may be used alone, or two or more thereof may be used in combination.

The NR is not particularly limited, and those common in the tire industry can be used, examples of which include, for example, SIR20, RSS#3, TSR20, and the like.

(Other rubber components)

The rubber composition may comprise a rubber component other than the above-described isoprene-based rubber. As another rubber component, a cross-linkable rubber component commonly used in the tire industry can be used, examples of which include, for example, diene-based rubbers such as a styrene-butadiene rubber (SBR), a butadiene rubber (BR), a styrene-isoprene-butadiene copolymer rubber (SIBR), a chloroprene rubber (CR), an acrylonitrile-butadiene rubber (NBR), a polynorbornene rubber, and the like, and non-diene-based rubbers such as a butyl rubber (IIR), a hydrogenated nitrile rubber (HNBR), an ethylene propylene rubber, a silicone rubber, a polyethylene chloride rubber, a fluororubber (FKM), an acrylic rubber (ACM), a hydrin rubber, and the like. Among them, the diene-based rubbers are preferable. These other rubber components may be used alone, or two or more thereof may be used in combination.

Among the other rubber components, a SBR and a BR are preferable. Therefore, examples of preferred aspects of the rubber component include, for example, one comprising an isoprene-based rubber and a SBR, one consisting of an isoprene-based rubber and a SBR, one comprising an isoprene-based rubber and a BR, one consisting of an isoprene-based rubber and a BR, and one comprising an isoprene-based rubber, a SBR, and a BR, and one consisting of an isoprene-based rubber, a SBR, and a BR.

<<SBR>>

The SBR is not particularly limited, examples of which include a solution-polymerized SBR (S-SBR), an emulsion-polymerized SBR (E-SBR), modified SBRs thereof (a modified S-SBR, a modified E-SBR), and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated ones of these SBRs (hydrogenated SBRs) and the like can also be used. These SBRs may be used alone, or two or more thereof may be used in combination.

An oil-extended SBR or a non-oil extended SBR can be used as the SBR. When the oil-extended SBR is used, an oil-extending amount of the SBR, that is, a content of an extending oil in the SBR is preferably 10 to 50 parts by mass based on 100 parts by mass of a rubber solid content of the SBR.

As the S-SBR that can be used in the present invention, those commercially available from JSR Corporation,

Sumitomo Chemical Co., Ltd., Ube Industries, Ltd., Asahi Kasei Corporation, ZS Elastomer Co., Ltd., ARLANXEO, etc. can be used.

The modified SBR may be one modified at a main chain and/or a terminal thereof with a modifying agent or one modified with a polyfunctional modifying agent such as, for example, tin tetrachloride, silicon tetrachloride, and the like to partially have a branched structure, preferably a SBR modified at a main chain and/or a terminal thereof with a modifying agent having a functional group that interacts with silica (modified BR for silica). Particularly, the first layer and/or the second layer preferably comprises a modified SBR.

Examples of the above-described functional group interacting with silica include, for example, an amino group, an amide group, an alkoxysilyl group, an isocyanate group, an imino group, an imidazole group, an urea group, an ether group, a carbonyl group, an oxycarbonyl group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydrocarbon group, a hydroxyl group, an oxy group, an epoxy group, etc. Besides, these functional groups may each have a substituent. Among them, from the viewpoint of improving dispersibility of silica, the amino group, the epoxy group, the hydroxyl group, the alkoxy group, and the alkoxysilyl group are preferable, and the amino group and the alkoxysilyl group are more preferable.

A styrene content of the SBR is preferably greater than 5% by mass, more preferably greater than 8% by mass, further preferably greater than 10% by mass, from the viewpoints of chipping resistance and abrasion resistance. Moreover, it is preferably less than 50% by mass, more preferably less than 30% by mass, further preferably less than 25% by mass, from the viewpoint of temperature dependency. Besides, in the present specification, the styrene content of the SBR is calculated by the above-described method.

A vinyl content of the SBR is preferably greater than 10 mol%, more preferably greater than 13 mol%, further preferably greater than 15 mol%, from the viewpoints of ensuring reactivity with silica, chipping resistance, and abrasion resistance. Moreover, the vinyl content of the SBR is preferably less than 70 mol%, more preferably less than 60 mol%, further preferably less than 40 mol%, from the viewpoints of prevention of increase in temperature dependency, elongation at break, and abrasion resistance. Besides, in the present specification, the vinyl content of the SBR (1,2-bond butadiene unit amount) is measured by the above-described method.

A weight-average molecular weight (Mw) of the SBR is preferably greater than 200,000, more preferably greater than 250,000, further preferably greater than 300,000, from the viewpoint of chipping resistance. Moreover, the weight-average molecular weight is preferably less than 2,000,000, more preferably less than 1,500,000, further preferably less than 1,000,000, from the viewpoint of cross-linking uniformity. Besides, in the present specification, the weight-average molecular weight of the SBR can be calculated by the above-described method.

<<BR>>

The BR is not particularly limited, and those common in the tire industry can be used, such as, for example, a BR having a cis content less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), a modified BR (a high cis modified BR, a low cis modified BR), and the like. These BRs may be used alone, or two or more thereof may be used in combination.

As the high cis BR, for example, those commercially available form Zeon Corporation, Ube Industries, Ltd., JSR Corporation, etc. can be used. The cis content is preferably greater than 94 mol%, more preferably greater than 95 mol%, further preferably 96 mol% or more, particularly preferably 98 mol% or more. Besides, in the present specification, the cis content (cis-1,4-bond butadiene unit amount) is a value calculated by the above-described method.

As the rare-earth-based BR, those which are synthesized using a rare-earth element-based catalyst and have a vinyl content of preferably less than 1.8 mol%, more preferably less than 1.0 mol%, further preferably less than 0.8 mol%, and a cis content of preferably greater than 94 mol%, more preferably greater than 95 mol%, further preferably 96 mol% or more, can be used. As the rare-earth-based BR, for example, those commercially available from LANXESS, ARLANXEO, etc. can be used.

Examples of the SPB-containing BR include those in which 1,2-syndiotactic polybutadiene crystal is chemically bonded with BR and dispersed, but not those in which the crystal is simply dispersed in the BR. As such a SPB-containing BR, those commercially available from Ube Industries, Ltd., etc. can be used.

Examples of the modified BR include those obtained by adding a tin compound after polymerizing 1,3-butadiene by a lithium initiator, the terminal of which is further bonded by tin-carbon bond (tin-modified BRs), a butadiene rubber whose main chain and/or terminal is modified with the above-described modifying agent having a functional group interacting with silica (modified BR for silica), and the like. Moreover, the modified BR may be either non-hydrogenated or hydrogenated.

A weight-average molecular weight (Mw) of the BR is preferably greater than 300,000, more preferably greater than 350,000, further preferably greater than 400,000, from the viewpoint of abrasion resistance. Moreover, it is preferably

less than 2,000,000, more preferably less than 1,500,000, further preferably less than 1,000,000, from the viewpoint of cross-linking uniformity. Besides, the weight-average molecular weight of the BR can be calculated by the above-described method.

The above-described isoprene-based rubber and other rubber components may be modified such that they can interact with the filler or may be unmodified ones. Moreover, an amount of double bonds in a molecular chain of each of these isoprene-based rubber and other rubber components may be decreased by a hydrogenation process, and an extended rubber that is previously extended with a plasticizing agent component which will be described later may be used for these isoprene-based rubber and other rubber components.

(Content)

A content of the isoprene-based rubber in the rubber component is preferably greater than 50% by mass, more preferably greater than 55% by mass, further preferably 60% by mass or more, further preferably 70% by mass or more, further preferably 80% by mass or more, further preferably greater than 90% by mass. Moreover, the content may be 100% by mass.

A content of the SBR when compounded in the rubber component is preferably less than 20% by mass, more preferably less than 15% by mass, further preferably 10% by mass or less. On the other hand, the content is preferably greater than 5% by mass, more preferably greater than 7% by mass, further preferably 10% by mass or more. Besides, the content of the SBR may be 0% by mass.

A content of the BR when compounded in the rubber component is preferably less than 50% by mass, more preferably less than 40% by mass, further preferably less than 35% by mass, further preferably 30% by mass or less, further preferably 20% by mass or less. On the other hand, the content of the BR is preferably greater than 5 parts by mass, more preferably greater than 10 parts by mass, further preferably greater than 15 parts by mass, further preferably 20 parts by mass or more. Besides, the content of the BR may be 0% by mass.

Preferred aspects of the rubber component include, for example, a rubber component comprising an isoprene-based rubber whose content is 60% by mass or more and 100% by mass or less, a SBR whose content is 0% by mass or more and 10% by mass or less, and a BR whose content is 0% by mass or more and 30% by mass or less.

<Filler>

The rubber composition of the present invention comprises carbon black and silica.

(Carbon black)

Examples of carbon black include, but not particularly limited to, N134, N110, N220, N234, N219, N339, N330, N326, N351, N550, N600, N660, N762, and the like. As a commercially available product, products of ASAHI CARBON CO., LTD., Cabot Japan K.K., TOKAI CARBON CO., LTD., Mitsubishi Chemical Corporation., Lion Corporation., NIPPON STEEL Carbon Co., Ltd., Columbia Carbon Corporation., etc. can be used. The carbon black may be used alone, or two or more thereof may be used in combination.

Moreover, as carbon black other than the above-described ones, carbon black made from a biomass material such as lignin and the like or recycled carbon black refined by pyrolyzing a product containing carbon black such as a tire and the like may be used from the viewpoint of a life cycle assessment and the like.

Among them, as carbon black, a particulate carbon black having an average primary particle size of 19 nm or less is preferable. As the particulate carbon black, those commonly used in the tire industry can be appropriately used, and for example, those manufactured and sold by ASAHI CARBON CO., LTD., Cabot Japan K.K., TOKAI CARBON CO., LTD., Mitsubishi Chemical Corporation., Lion Corporation., NIPPON STEEL Carbon Co., Ltd., Columbia Carbon Corporation., etc. can be used as the particulate carbon black. The particulate carbon black may be used alone, or two or more thereof may be used in combination.

The average primary particle size of the particulate carbon black is preferably less than 19 nm, more preferably 18 nm or less. A lower limit of the average primary particle size may be, but not particularly limited to, for example, greater than 1 nm, greater than 3 nm, or greater than 5 nm. Besides, the average primary particle size of the particulate carbon black can be measured by the above-described method.

A nitrogen adsorption specific surface area ($N_2SA$) of the particulate carbon black is preferably greater than 130 $m^2/g$, more preferably greater than 135 $m^2/g$, further preferably greater than 140 $m^2/g$, from the viewpoint of reinforcing property. Moreover, it is preferably less than 300 $m^2/g$, more preferably less than 200 $m^2/g$, further preferably less than 180 $m^2/g$, from the viewpoints of fuel efficiency and processability. Besides, the $N_2SA$ of the particulate carbon black can be measured by the above-described method.

A content of the particulate the carbon black based on 100 parts by mass of the rubber component is preferably

greater than 20 parts by mass, more preferably greater than 30 parts by mass, further preferably greater than 40 parts by mass. On the other hand, the content is preferably less than 150 parts by mass, more preferably less than 100 parts by mass, further preferably less than 80 parts by mass, further preferably less than 60 parts by mass.

Although a content of the particulate carbon black based on a total amount of carbon black is not particularly limited and may be 0% by mass or 100% by mass, it is preferably 100% by mass from the viewpoint of effects of the present invention. The content is preferably greater than 40% by mass, more preferably 50% by mass or more, further preferably greater than 75% by mass, further preferably greater than 90% by mass.

(Silica)

Silica is not particularly limited, and for example, those common in the tire industry can be used, such as silica prepared by a dry process (anhydrous silica), silica prepared by a wet process (hydrous silica), and the like. Among them, hydrous silica prepared by a wet process is preferable from the reason that it has many silanol groups. The silica may be used alone, or two or more thereof may be used in combination.

As silica other than the above-described ones, silica made from a biomass material such as rice husks and the like may be used from the viewpoint of a life cycle assessment and the like.

A nitrogen adsorption specific surface area ($N_2SA$) of silica is preferably 120 $m^2/g$ or more, more preferably 140 $m^2/g$ or more, further preferably 160 $m^2/g$ or more, from the viewpoint of chipping resistance. Moreover, it is preferably 350 $m^2/g$ or less, more preferably 300 $m^2/g$ or less, further preferably 250 $m^2/g$ or less, from the viewpoints of fuel efficiency and processability. Besides, the $N_2SA$ of silica in the present specification is a value measured by the BET method according to ASTM D3037-93.

A content of the silica based on 100 parts by mass of the rubber component is preferably greater than 1 part by mass, more preferably greater than 3 parts by mass, further preferably greater than 5 parts by mass, further preferably 8.5 parts by mass or more. On the other hand, the content of silica is preferably less than 75 parts by mass, more preferably less than 50 parts by mass, further preferably 25 parts by mass or less, further preferably less than 10 parts by mass, further preferably 8.5 parts by mass or less.

Regarding the content of silica and the content of carbon black, the content of silica is preferably less than the content of carbon black. That is, when the content (part by mass) of the carbon black based on 100 parts by mass of the rubber component is referred to as $A_1$ and the content (part by mass) of the silica based on 100 parts by mass of the rubber component is referred to as $B_1$, $A_1$ and $B_1$ preferably satisfy the following inequality (2),

$$B_1/(A_1 + B_1) < 0.50 \qquad (2).$$

The right side of the above-described inequality (2) is preferably 0.40, more preferably 0.30, further preferably 0.25, further preferably 0.20, further preferably 0.15, further preferably 0.13.

A total content of the silica and the particulate carbon black based on 100 parts by mass of the rubber component is preferably greater than 25 parts by mass, more preferably greater than 35 parts by mass, further preferably greater than 45 parts by mass. Moreover, the total content is preferably less than 200 parts by mass, more preferably less than 160 parts by mass, further preferably less than 120 parts by mass, further preferably less than 80 parts by mass, further preferably less than 60 parts by mass.

(Other fillers)

As a filler, in addition to the above-described particulate carbon black and silica, another filler may be further used. Such a filler is not particularly limited, and any fillers commonly used in this field can be used, such as, for example, carbon black other than the above-described particulate carbon black, aluminum hydroxide, alumina (aluminum oxide), calcium carbonate, magnesium sulfate, talc, clay, biochar, and the like. These fillers may be used alone, or two or more thereof may be used in combination. The filler is preferably one that does not include any other filler and that consists of the particulate carbon black and silica.

(Silane coupling agent)

A silane coupling agent can be used for the rubber composition of the present invention. The silane coupling agent is not particularly limited, and any silane coupling agents conventionally used in combination with silica in the tire industry can be used, examples of which include, for example, a sulfide-based silane coupling agent such as bis(3-triethoxysilylpropyl)disulfide, bis(3-triethoxysilylpropyl)tetrasulfide, and the like; a vinyl-based silane coupling agent such as vinyltriethoxysilane, vinyltrimethoxysilane, and the like; an amino-based silane coupling agent such as 3-aminopropyltriethoxysilane, 3-aminopropyltrimethoxysilane, 3-(2-aminoethyl)aminopropyltriethoxysilane, and the like; a glycidoxy-based silane coupling agent such as γ-glycidoxypropyltriethoxysilane,γ-glycidoxypropyltrimethoxysilane, and the like; a nitro-based silane coupling agent such as 3-nitropropyltrimethoxysilane, 3-nitropropyltriethoxysilane, and the like; a chloro-based silane coupling agent such as 3-chloropropyltrimethoxysilane, 3-chloropropyltriethoxysilane, and the like; a mercapto-based silane coupling agent; and the like. Among them, a sulfide-based silane coupling agent and/or a mercapto-based silane coupling agent are preferable. These silane coupling agents may be used alone, or two or more thereof may be used in combination.

The mercapto-based silane coupling agent is preferably a compound represented by the following chemical formula (1) and/or a compound comprising a bond unit A represented by the following chemical formula (2) and a bond unit B represented by the following chemical formula (3).

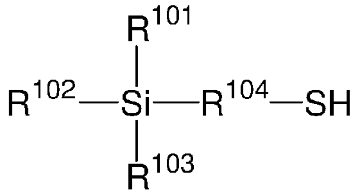

(1)

(wherein, $R^{101}$, $R^{102}$, and $R^{103}$ each independently represents an alkyl having 1 to 12 carbon atoms, alkoxy having 1 to 12 carbon atoms, or a group represented by $-O-(R^{111}-O)_z-R^{112}$ (z pieces of $R^{111}$ each independently represents a divalent hydrocarbon group having 1 to 30 carbon atoms; $R^{112}$ represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and $R^{104}$ represents an alkylene having 1 to 6 carbon atoms.)

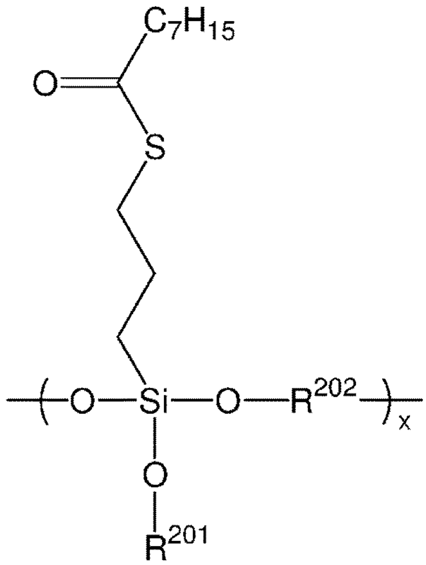

(2)

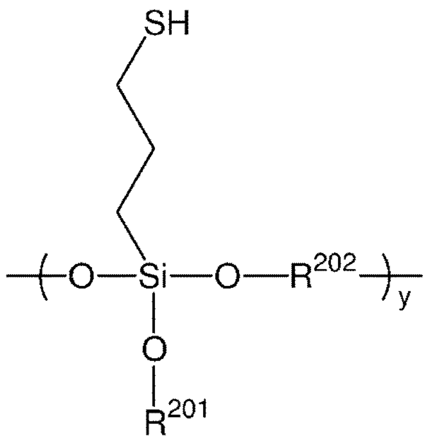

(3)

(wherein, x represents an integer of 0 or more; y represents an integer of 1 or more; $R^{201}$ represents a hydrogen atom, or an alkyl having 1 to 30 carbon atoms, an alkenyl having 2 to 30 carbon atoms or an alkynyl having 2 to 30 carbon atoms optionally substituted with a halogen atom, hydroxyl or carboxyl; and $R^{202}$ represents an alkylene having 1 to 30 carbon atoms, an alkenylene having 2 to 30 carbon atoms, or an alkynylene having 2 to 30 carbon atoms; where $R^{201}$ and $R^{202}$ may together form a ring structure.)

Examples of the compound represented by the chemical formula (1) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following chemical formula (4) (Si363 manufactured by Evonik Degussa GmbH), etc., and the compound represented by the following chemical formula (4) can be appropriately used. They may be used alone, or two or more thereof may be used in combination.

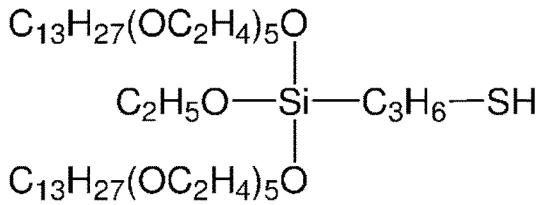

(4)

Examples of the compound comprising the bond unit A represented by the chemical formula (2) and the bond unit B represented by the chemical formula (3) include, for example, those manufactured and sold by Momentive Performance Materials, etc. They may be used alone, or two or more thereof may be used in combination.

A content of the silane coupling agent based on 100 parts by mass of silica is preferably greater than 1.0 part by mass, more preferably greater than 3.0 parts by mass, further preferably greater than 5.0 parts by mass, from the viewpoint of improvement in dispersibility of silica. Moreover, it is preferably less than 20 parts by mass, more preferably less than 15 parts by mass, further preferably less than 12 parts by mass, from the viewpoints of cost and processability.

<Resin component>

Examples of the resin component include, but not particularly limited to, a petroleum resin, a terpene-based resin, a rosin-based resin, a phenol-based resin, and the like which are commonly used in the tire industry. The resin component is preferably a thermoplastic resin. These resin components may be used alone, or two or more thereof may be used in combination.

Examples of the petroleum resin include a C5-based petroleum resin, an aromatic petroleum resin, a C5-C9-based petroleum resin, and the like. Among them, the C5-based petroleum resin means a resin obtained by polymerizing C5 fractions. Examples of C5 fractions include, for example, petroleum fractions having 4 to 5 carbon atoms, such as cyclopentadiene, pentene, pentadiene, isoprene, and the like. Dicyclopentadiene resin (DCPD resin) is appropriately used as a C5-based petroleum resin.

The aromatic petroleum resin means a resin obtained by polymerizing C9 fractions and may be those undergoing hydrogeneration or modification. Examples of C9 fractions include, for example, petroleum fractions having 8 to 10 carbon atoms, such as vinyltoluene, alkylstyrene, indene, methylindene, and the like. As specific example of the aromatic petroleum resin, for example, a coumarone-indene resin, a coumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and the copolymer of α-methylstyrene and styrene is more preferable, because it is economical, easy to process, and excellent in heat generation. As the aromatic vinyl-based resin, for example, those commercially available from Braskem, Kraton Corporation, Eastman Chemical Company, etc. can be used.

The C5-C9-based petroleum resin means a resin obtained by polymerizing the C5 fractions and the C9 fractions and may be those undergoing hydrogeneration or modification. Examples of C5 fractions and C9 fractions include the above-described petroleum fractions. As the C5-C9-based petroleum resin, for example, those commercially available from Tosoh Corporation, Zibo Luhua Hongjin New Material Co., Ltd., etc. can be used.

Examples of the terpene-based resin include a polyterpene resin consisting of at least one selected from terpene compounds such as α-pinene, β-pinene, limonene, dipentene, and the like; an aromatic modified terpene resin made from a terpene compound described above and an aromatic compound; and a terpene phenol resin made from a terpene compound and a phenol-based compound; and a resin obtained by hydrogenating these types of terpene-based resin (hydrogenated terpene-based resin). Examples of the aromatic compound from which the aromatic modified terpene resin is made include, for example, styrene, α-methylstyrene, vinyltoluene, divinyltoluene, and the like. Examples of the phenol-based compound from which the terpene phenol resin is made include, for example, phenol, bisphenol A, cresol, xylenol,

and the like.

Examples of the rosin-based resin include, but not particularly limited to, for example, a natural resin rosin such as a tall rosin, a gum rosin, a wood rosin, and the like, and a rosin-modified resin obtained by modifying it by hydrogenation, disproportionation, dimerization, or esterification, and the like.

Examples of the phenol-based resin include, but not particularly limited to, a phenol formaldehyde resin, an alkylphenol formaldehyde resin, an alkyl phenol acetylene resin, an oil-modified phenol formaldehyde resin, and the like.

A softening point of the resin component is preferably 60°C or higher, more preferably 65°C or higher, further preferably 70°C or higher, from the viewpoint of wet grip performance. Moreover, it is preferably 150°C or lower, more preferably 140°C or lower, further preferably 130°C or lower, from the viewpoints of processability and improvement in dispersibility of the rubber component with the filler. Besides, a softening point specified in JIS K 6220-1: 2001 is measured with a ring and ball softening point measuring device, and the softening point can be defined as a temperature at which a sphere drops.

A content of the resin component based on 100 parts by mass of the rubber component is preferably greater than 0.1 parts by mass, more preferably greater than 0.2 parts by mass, further preferably 0.3 parts by mass or more, from the viewpoint of chipping resistance. On the other hand, the content is preferably less than 20 parts by mass, more preferably less than 10 parts by mass, further preferably less than 5 parts by mass, further preferably less than 3 parts by mass, further preferably less than 1 part by mass, from the viewpoint of suppressing heat generation.

<Other compounding agents>

The rubber composition constituting each layer of the tread according to the present invention can appropriately comprise compounding agents conventionally and commonly used in the tire industry, such as, for example, a plasticizing agent other than the resin component, wax, processing aid, stearic acid, zinc oxide, an antioxidant, a vulcanizing agent, a vulcanization accelerator, and the like, in addition to the above-described components.

(Plasticizing agent other than resin component)

The rubber composition constituting each layer of the tread according to the present invention preferably comprises a plasticizing agent other than the resin component. Examples of the plasticizing agent include, for example, oil, a liquid rubber, an ester-based plasticizing agent, and the like.

Examples of oil include, for example, process oils, vegetable oils and fats, animal oils and fats, and the like. Examples of the process oils include paraffinic process oils, naphthenic process oils, aromatic process oils, and the like. Moreover, as an environmental measure, process oils each having a low content of a polycyclic aromatic compound (PCA) can also be used. Examples of the process oils each having a low content of a PCA include mild extraction solvates (MES), treated distillate aromatic extracts (TDAE), heavy naphthenic oil, and the like.

Moreover, from the viewpoint of a life cycle assessment, a lubricating oil after used in a rubber mixer, an engine, or the like or a waste cooking oil after used in a cooking facility are appropriately refined to obtain refined oils, and the refined oils may be used by substituting an equal amount of the above-mentioned oils.

A content of oil when compounded based on 100 parts by mass of the rubber component is preferably greater than 1 part by mass, more preferably greater than 3 parts by mass, further preferably greater than 5 parts by mass, particularly preferably greater than 7 parts by mass, from the viewpoint of processability. Moreover, it is preferably less than 50 parts by mass, more preferably less than 25 parts by mass, further preferably less than 10 parts by mass, from the viewpoint of abrasion resistance. Besides, in the present specification, the content of oil also includes an amount of oil contained in an oil-extended rubber.

The liquid rubber is not particularly limited as long as it is a polymer in a liquid state at room temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. These liquid rubbers may be used alone, or two or more thereof may be used in combination.

A content of the liquid rubber when compounded based on 100 parts by mass of the rubber component is preferably greater than 1 part by mass, more preferably greater than 3 parts by mass, further preferably greater than 5 parts by mass, particularly preferably greater than 7 parts by mass. Moreover, the content of the liquid rubber is preferably less than 50 parts by mass, more preferably less than 25 parts by mass, further preferably less than 10 parts by mass.

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

(Wax)

A content of wax when compounded based on 100 parts by mass of the rubber component is preferably greater than 0.5 parts by mass, more preferably greater than 1 part by mass, from the viewpoint of weather resistance of a rubber. Moreover, it is preferably less than 10 parts by mass, more preferably less than 5 parts by mass, from the viewpoint of prevention of whitening of a tire due to bloom.

(Processing aid)

Examples of processing aid include, for example, a fatty acid metal salt, a fatty acid amide, an amide ester, a silica surfactant, a fatty acid ester, a mixture of a fatty acid metal salt and an amide ester, a mixture of a fatty acid metal salt and a fatty acid amide, and the like. The processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably greater than 0.5 parts by mass, more preferably greater than 1 part by mass, from the viewpoint of exhibiting an effect of improving processability. Moreover, it is preferably less than 10 parts by mass, more preferably less than 8 parts by mass, from the viewpoints of abrasion resistance and breaking strength.

(Antioxidant)

Examples of the antioxidant include, but not particularly limited to, for example, amine-based, quinoline-based, quinone-based, phenol-based, and imidazole-based compounds, and antioxidants such as a carbamic acid metal salt and the like, and a phenylenediamine-based antioxidant such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and the like; and a quinoline-based antioxidant such as 2,2,4-trimethyl-1,2-dihydroquinoline polymer, 6-ethoxy-2,2,4-trimethyl-1,2-dihydroquinoline, and the like are preferable. These antioxidants may be used alone, or two or more thereof may be used in combination.

A content of the antioxidant when compounded based on 100 parts by mass of the rubber component is preferably greater than 0.5 parts by mass, more preferably greater than 1.0 part by mass, further preferably greater than 1.5 parts by mass, from the viewpoint of ozone crack resistance of a rubber. Moreover, it is preferably less than 10.0 parts by mass, more preferably less than 5.0 parts by mass, from the viewpoints of abrasion resistance and wet grip performance.

(Stearic acid)

A content of stearic acid when compounded based on 100 parts by mass of the rubber component is preferably greater than 0.5 parts by mass, more preferably 1.0 part by mass or more, further preferably greater than 1.5 parts by mass, from the viewpoint of processability. Moreover, it is preferably less than 10.0 parts by mass, more preferably less than 5.0 parts by mass, from the viewpoint of vulcanization rate.

(Zinc oxide)

A content of zinc oxide when compounded based on 100 parts by mass of the rubber component is preferably greater than 0.5 parts by mass, more preferably greater than 1.0 part by mass, further preferably greater than 1.5 parts by mass, from the viewpoint of processability. Moreover, it is preferably less than 10.0 parts by mass, more preferably less than 5.0 parts by mass, from the viewpoint of abrasion resistance.

(Vulcanizing agent)

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as the vulcanizing agent based on 100 parts by mass of the rubber component is preferably greater than 0.1 parts by mass, more preferably greater than 0.3 parts by mass, further preferably greater than 0.5 parts by mass, from the viewpoint of securing a sufficient vulcanization reaction. Moreover, it is preferably less than 3.0 parts by mass, more preferably less than 1.5 parts by mass, further preferably less than 1. 25 parts by mass, further preferably 1.15 parts by mass or less, from the viewpoint of prevention of deterioration. Besides, a content of the vulcanizing agent when an oil-containing sulfur is used as the vulcanizing agent is defined as a total content of pure sulfur

contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyl dithio)hexan, and the like. As these vulcanizing agents other than sulfur, those commercially available from Taoka Chemical Co., Ltd., LANXESS, Flexsys, etc. can be used.

(Vulcanization accelerator)

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, xanthate-based vulcanization accelerators, and the like. These vulcanization accelerators may be used alone, or two or more thereof may be used in combination. Among them, one or more vulcanization accelerators selected from the group consisting of sulfenamide-based, guanidine-based, and thiazole-based vulcanization accelerators are preferable, and the sulfenamide-based vulcanization accelerator is more preferable.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, N-tert-butyl-2-benzothiazolyl sulfenamide (TBBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenyl guanidine, 1,3-di-o-biphenyl guanidine, 1,3-di-o-cumenyl-2-propionyl guanidine, and the like. Among them, 1,3-diphenylguanidine (DPG) is preferable.

Examples of the thiazole-based vulcanization accelerator include, for example, 2-mercaptobenzothiazole, cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component is preferably greater than 1.0 part by mass, more preferably greater than 1.25 parts by mass, further preferably 1.5 parts by mass or more. Moreover, the content of the vulcanization accelerator based on 100 parts by mass of the rubber component is preferably less than 8.0 parts by mass, more preferably less than 6.0 parts by mass, further preferably less than 3.0 parts by mass. When the content of the vulcanization accelerator is within the above-described ranges, breaking strength and elongation tend to be secured.

(Content of sulfur)

The content of sulfur (an amount of sulfur elements based on 100 parts by mass of the rubber component in the rubber composition) is preferably less than 2.00 parts by mass, more preferably 1.98 parts by mass or less, further preferably less than 1.85 parts by mass, further preferably 1.82 parts by mass or less, from the viewpoint of chipping resistance. On the other hand, a lower limit value of the content of sulfur is, but not particularly limited to, usually, about 1.50 parts by mass.

[Rubber composition constituting second layer of tread part]

The second layer of the tread part of the heavy-duty tire of the present invention is, so-called, a member referred to as a base tread. As a rubber composition constituting such a second layer, a rubber composition for base tread commonly used in this field can be used. Specific examples of the rubber composition for base tread include, for example, those described in the columns of Examples.

[Rubber composition constituting another layer of tread part]

The tread part of the heavy-duty tire of the present invention may further comprise one or more middle layers between the first layer and the second layer. As a rubber composition constituting such middle layers, a rubber composition for middle layer commonly used in this field can be used. Specific examples of the rubber composition for middle layer include, for example, those described in the columns of Examples.

[Application]

The heavy-duty tire of the present invention is a concept including not only large trucks and buses but also small trucks, buses, vans, and the like, and is a tire with a standardized load of greater than 1000 kg. Moreover, in a case where the heavy-duty tire of the present invention is used as a tire for small vehicles, a cord of a belt reinforcement layer and/or a

carcass is preferably a textile cord. The heavy-duty tire of the present invention is preferably a tire mounted to a large vehicle such as a truck, a bus, a construction vehicle, and the like and is preferably a tire with a standardized load of 1400 kg or more.

[Production method]

<Production of rubber composition>

The rubber composition of the present invention can be produced by a known method. For example, it can be produced by kneading the above-described components with a rubber kneading machine such as an open roll, a sealed type kneader (a Banbury mixer, a kneader, and the like), and the like. A kneading step includes, for example, a base kneading step of kneading compounding agents and additives other than a vulcanizing agent and a vulcanization accelerator, and a final kneading (F-kneading) step of adding the vulcanizing agent and the vulcanization accelerator to the kneaded product obtained in the base kneading step and kneading them. Additionally, the base kneading step can also be divided into multiple steps as necessary. Examples of a kneading condition include, but not particularly limited to, for example, a method of kneading at a discharge temperature of 150°C to 170°C for 3 to 10 minutes in the base kneading step and kneading at 50°C to 110°C for 1 to 5 minutes in the final kneading step.

<Production of tire>

An unvulcanized tire can be produced by extruding a rubber composition, obtained by compounding the above-described components, into a desired shape of each layer of a tread, with the rubber composition remaining unvulcanized, and molding it together with other tire members on a tire forming machine by a usual method. A tire of the present invention can be obtained by heating and pressurizing (vulcanizing) this unvulcanized tire in a vulcanizing machine. Examples of a vulcanization condition include, but not particularly limited to, for example, a method of vulcanizing at 150°C to 200°C for 5 to 30 minutes.

EXAMPLES

Hereinafter, examples considered to be preferable in implementing the present invention (Examples) will be described, though the scope of the present invention is not limited to only these Examples.

Tires obtained using various chemicals which will be described below in accordance with each table are studied, and results calculated based on the following evaluation methods are shown as chipping resistance indexes in a lower part of each table.

[Example and Comparative example]

<Various chemicals>

Various chemicals used in Examples and Comparative examples are collectively shown below.

NR: TSR 20
BR: BUNA CB24 manufactured by ARLANXEO (BR synthesized using a Nd-based catalyst, cis content: 96 mol%, vinyl content: 0.7 mol%, Mw: 500,000)
SBR: SBR1502 manufactured by ARLANXEO (styrene content: 23.5% by mass, vinyl content: 18 mol%, Mw: 500,000)
Carbon black 1: N134 ($N_2SA$: 148 $m^2/g$, average primary particle size: 18 nm)
Carbon black 2: N220 manufactured by BIRLA CARBON BRASIL LTDA. ($N_2SA$: 115 $m^2/g$, average primary particle size: 22 nm)
Silica: TOKUSIL USG-A manufactured by OSC Siam Silica Co., Ltd. ($N_2SA$: 175 $m^2/g$)
Silane coupling agent: Si266 manufactured by Evonik Degussa GmbH (bis(3-triethoxysilylpropyl)disulfide)
Resin component: UNILEN A-100 manufactured by Braskem (aromatic petroleum resin, softening point: 96 to 105°C (the softening point is measured according to ASTM D6943))
Oil: Diana process oil PA32 manufactured by Idemitsu Kosan Co., Ltd.
Zinc oxide: Zinc oxide No. 2 manufactured by Mitsui Mining & Smelting Co., Ltd.
Antioxidant: Nocrac 6C manufactured by Ouchi Shinko Chemical Industry Co., Ltd. (N-(1,3-dimethylbutyl)-N'-phenyl-p-phenylenediamine)
Stearic acid: Bead stearic acid "CAMELLIA" manufactured by NOF CORPORATION

Wax: Sunnoc N manufactured by Ouchi Shinko Chemical Industry Co., Ltd.
Sulfur: Powdered sulfur manufactured by Karuizawa Sulfur Co, Ltd.
Vulcanization accelerator: Nocceler NS-P manufactured by Ouchi Shinko Chemical Industry Co., Ltd. (N-tert-butyl-2-benzothiazolylsulfenamide)

<Unvulcanized rubber composition>

According to the compounding formulations shown in Table 1, using a 1.7 L closed Banbury mixer, all chemicals other than the sulfur and vulcanization accelerator are kneaded for 1 to 10 minutes until the temperature reaches a discharge temperature of 150°C to 160°C, to obtain a kneaded product. Next, using a twin-screw open roll, the sulfur and vulcanization accelerator are added to the obtained kneaded product, and the mixture is kneaded for 4 minutes until the temperature reaches 105°C, to obtain an unvulcanized rubber composition.

<Tire comprising two-layer tread>

The obtained unvulcanized rubber composition is molded into shapes of a first layer (thickness: 17.2 mm) and a second layer (thickness: 5.0 mm) of a tread according to Table 2 and attached together with other tire members to produce an unvulcanized tire, and the unvulcanized tire is vulcanized at 170°C, thereby obtaining each test tire (size: 12R22.5, tire for truck/bus). Besides, each block of a tread surface of the first layer has two sipes.

<Tire comprising three-layer tread>

The unvulcanized rubber composition is molded into shapes of a first layer (thickness: 17.2 mm), a middle layer (thickness: 3.0 mm), and a second layer (thickness: 2.0 mm) of a tread according to Table 3 and attached together with other tire members to produce an unvulcanized tire, and the unvulcanized tire is vulcanized at 170°C, thereby obtaining each test tire (size: 12R22.5, tire for truck/bus).

(Content of sulfur)

The content of sulfur means an amount (% by mass) of sulfur elements based on 100 parts by mass of the rubber component and is measured for a rubber composition sample cut out from each test tire. The "amount of sulfur elements based on 100 parts by mass of the rubber component" is calculated from: a total sulfur amount (TS amount) including an amount of sulfur elements contained in a vulcanizing agent and amounts of sulfur elements contained in a vulcanization accelerator, a coupling agent, and the like; and an amount of a rubber component (PC amount), by TS amount $\div$ PC amount $\times$ 100. Here, the "TS amount" is measured in percent by mass for a test piece cut out from a tread of each test tire by the oxygen combustion flask method according to JIS K 6233. On the other hand, a "PC amount" is measured as a weight loss content (mass (%)) measured when a test piece cut out from a tread of each test tire is set to a Soxhlet extractor, acetone extraction is performed under a condition where the mass of the test piece is 10 g or less; the volume of acetone is 150 ml; the temperature of a thermostatic bath is 95 to 100°C; and extraction time is 72 hours, and, for the test piece subjected to the acetone extraction, an organic matter is pyrolyzed and vaporized according to JIS K 6226-1:2003 by heating of the test piece under a nitrogen atmosphere (with a rise from a room temperature to 750°C).

(Chipping resistance)

Each test tire is rim-assembled to a rim (7.50 $\times$ 22.5), and the internal pressure is adjusted to 750 kPa. This tire is mounted on a drive wheel of a test vehicle (2-D truck). After a running distance of this test vehicle (loading capacity: 8 tons) reaches 8,000 km, a state of block chipping is visually observed and is rated. The results are indicated as indexes with scores of reference examples being as 100. The results show that the larger the index is, the less likely the block chipping occurs, and the higher the chipping resistance is.

Table 1

| | a1 | a2 | a3 | a4 | a5 | a6 | a7 | a8 | a9 | b | c |
|---|---|---|---|---|---|---|---|---|---|---|---|
| Compounding amount (part by mass) | | | | | | | | | | | |
| NR | 100 | 100 | 100 | 100 | 80 | 60 | 80 | 80 | - | 70 | 100 |
| BR | - | - | - | - | 20 | 30 | 20 | - | 50 | 30 | - |
| SBR | - | - | - | - | - | 10 | - | 20 | 50 | - | - |

(continued)

| | | | | | | | | | | | |
|---|---|---|---|---|---|---|---|---|---|---|---|
| Compounding amount (part by mass) | | | | | | | | | | | |
| CB 1 | - | 25 | 41 | 41 | 41 | 41 | - | - | - | - | - |
| CB 2 | 25 | - | - | - | - | - | 25 | 25 | 25 | 40 | 35 |
| Silica | 25 | 25 | 8.5 | 8.5 | 8.5 | 8.5 | 25 | 25 | 25 | - | 5 |
| Silane coupling agent | 2.5 | 2.5 | 0.9 | 0.9 | 0.9 | 0.9 | 2.5 | 2.5 | 2.5 | - | 0.05 |
| Compounding amount (part by mass) | | | | | | | | | | | |
| Resin component | - | - | - | 0.4 | 0.4 | 0.4 | - | - | - | - | - |
| Oil | - | - | - | - | - | - | - | - | - | 8 | - |
| Zinc oxide | 3 | 3 | 3 | 3 | 3 | 3 | 3 | 3 | 3 | 2 | 3.5 |
| Antioxidant | 2.7 | 2.7 | 2.7 | 2.7 | 2.7 | 2.7 | 2.7 | 2.7 | 2.7 | 3 | 1.5 |
| Stearic acid | 2 | 2 | 2 | 2 | 2 | 2 | 2 | 2 | 2 | 2 | 2 |
| Wax | 1.3 | 1.3 | 1.3 | 1.3 | 1.3 | 1.3 | 1.3 | 1.3 | 1.3 | 2 | - |
| Compounding amount (part by mass) | | | | | | | | | | | |
| Sulfur | 1.15 | 1.15 | 1.15 | 1.15 | 1.15 | 1.15 | 1.15 | 1.15 | 1.15 | 1.5 | 2.5 |
| Vulcanization accelerator | 1.5 | 1.5 | 1.5 | 1.5 | 1.5 | 1.5 | 1.5 | 1.5 | 1.5 | 1.5 | 1.5 |
| TS (% by mass) | 1.2 | 1.2 | 1.1 | 1.1 | 1.1 | 1.1 | 1.2 | 1.2 | 1.2 | 1.3 | 1.9 |
| PC (% by mass) | 60.5 | 60.5 | 60.9 | 60.9 | 60.8 | 60.6 | 60.5 | 59.6 | 59.3 | 62.5 | 65.3 |
| Sulfur content (TS/PC×100) (% by mass) | 1.98 | 1.98 | 1.81 | 1.81 | 1.81 | 1.82 | 1.98 | 2.01 | 2.02 | 2.08 | 2.91 |

Table 2

| Tire (two-layer tread) | | | | | | | | | | | |
|---|---|---|---|---|---|---|---|---|---|---|---|
| | Example | | | | | | | | | | |
| | 1* | 2* | 3* | 4* | 5* | 6 | 7 | 8 | 9* | 10* | 11* |
| Tread first layer | a1 | a1 | a1 | a2 | a3 | a4 | a5 | a6 | a3 | a3 | a3 |
| Thickness (mm) (H) | 17.2 | 17.2 | 17.2 | 17.2 | 17.2 | 17.2 | 17.2 | 17.2 | 17.2 | 17.2 | 17.2 |
| Depth of sipe (mm) (D) | 15.0 | 10.0 | 2.0 | 2.0 | 2.0 | 2.0 | 2.0 | 2.0 | 2.0 | 2.0 | 2.0 |
| Inequality (1) D / H | 0.87 | 0.58 | 0.12 | 0.12 | 0.12 | 0.12 | 0.12 | 0.12 | 0.12 | 0.12 | 0.12 |
| CB content (part by mass) ($A_1$) | 25 | 25 | 25 | 25 | 41 | 41 | 41 | 41 | 41 | 41 | 41 |
| Silica content (part by mass) ($B_1$) | 25 | 25 | 25 | 25 | 8.5 | 8.5 | 8.5 | 8.5 | 8.5 | 8.5 | 8.5 |
| Inequality (2) $B_1$ / ($A_1$ +$B_1$) | 0.50 | 0.50 | 0.50 | 0.50 | 0.17 | 0.17 | 0.17 | 0.17 | 0.17 | 0.17 | 0.17 |
| Land ratio (%) (C) | 85 | 85 | 85 | 85 | 85 | 85 | 85 | 85 | 60 | 85 | 85 |
| Inequality (3) $A_1 \times C$ / 1000 | 2.13 | 2.13 | 2.13 | 2.13 | 3.49 | 3.49 | 3.49 | 3.49 | 2.46 | 3.49 | 3.49 |
| Inequality (4) $A_1$ / (D / H) | 29 | 43 | 215 | 215 | 353 | 353 | 353 | 353 | 353 | 353 | 353 |
| Inequality (5) $GW_{CE}$ / $GW_{SH}$ | 0.75 | 0.75 | 0.75 | 0.75 | 0.75 | 0.75 | 0.75 | 0.75 | 0.75 | 0.60 | 0.75 |
| Inequality (6) $W_{SH}$ / TW | 0.48 | 0.48 | 0.48 | 0.48 | 0.48 | 0.48 | 0.48 | 0.48 | 0.48 | 0.48 | 0.40 |

(continued)

| Tire (two-layer tread) | | | | | | | | | | | |
|---|---|---|---|---|---|---|---|---|---|---|---|
| | Example | | | | | | | | | | |
| | 1* | 2* | 3* | 4* | 5* | 6 | 7 | 8 | 9* | 10* | 11* |
| Rubber hardness | 62 | 62 | 62 | 63 | 66 | 66 | 67 | 68 | 66 | 66 | 66 |
| Tread second layer | c | c | c | c | c | c | c | c | c | c | c |
| Thickness (mm) | 5 | 5 | 5 | 5 | 5 | 5 | 5 | 5 | 5 | 5 | 5 |
| CB content (part by mass) ($A_2$) | 35 | 35 | 35 | 35 | 35 | 35 | 35 | 35 | 35 | 35 | 35 |
| Inequality (7) $A_2$ / $A_1$ | 1.40 | 1.40 | 1.40 | 1.40 | 0.85 | 0.85 | 0.85 | 0.85 | 0.85 | 0.85 | 0.85 |
| Silica content (part by mass) ($B_2$) | 5 | 5 | 5 | 5 | 5 | 5 | 5 | 5 | 5 | 5 | 5 |
| Inequality (8) $B_2$ / $B_1$ | 0.20 | 0.20 | 0.20 | 0.20 | 0.59 | 0.59 | 0.59 | 0.59 | 0.59 | 0.59 | 0.59 |
| Chipping resistance index | 108 | 114 | 118 | 124 | 136 | 152 | 144 | 148 | 130 | 134 | 132 |
| * Examples 1 to 5 and 9 to 11 are not according to the invention. | | | | | | | | | | | |

| | Comparative example | | | | | |
|---|---|---|---|---|---|---|
| | 1 | 2 | 3 | 4 | 5 | 6 |
| Tread first layer | a1 | a7 | a8 | a9 | a9 | b |
| Thickness (mm) (H) | 17.2 | 17.2 | 17.2 | 17.2 | 17.2 | 17.2 |
| Depth of sipe (mm) (D) | 17.2 | 17.2 | 17.2 | 17.2 | 2.0 | 17.2 |
| Inequality (1) D / H | 1.00 | 1.00 | 1.00 | 1.00 | 0.12 | 1.00 |
| CB content (part by mass) ($A_1$) | 25 | 25 | 25 | 25 | 25 | 40 |
| Silica content (part by mass) ($B_1$) | 25 | 25 | 25 | 25 | 25 | 0 |
| Inequality (2) $B_1$ / ($A_1$ + $B_1$) | 0.50 | 0.50 | 0.50 | 0.50 | 0.50 | 0.00 |
| Land ratio (%) (C) | 85 | 85 | 85 | 85 | 85 | 85 |
| Inequality (3) $A_1 \times C / 1000$ | 2.13 | 2.13 | 2.13 | 2.13 | 2.13 | 3.40 |
| Inequality (4) $A_1$ / (D / H) | 25 | 25 | 25 | 25 | 215 | 40 |
| Inequality (5) $GW_{CE}$ / $GW_{SH}$ | 0.75 | 0.75 | 0.75 | 0.75 | 0.75 | 0.75 |
| Inequality (6) $W_{SH}$ / TW | 0.48 | 0.48 | 0.48 | 0.48 | 0.48 | 0.48 |
| Rubber hardness | 62 | 63 | 63 | 64 | 64 | 68 |
| Tread second layer | c | c | c | c | c | c |
| Thickness (mm) | 5 | 5 | 5 | 5 | 5 | 5 |
| CB content (part by mass) ($A_2$) | 35 | 35 | 35 | 35 | 35 | 35 |
| Inequality (7) $A_2$ / $A_1$ | 1.40 | 1.40 | 1.40 | 1.40 | 1.40 | 0.88 |
| Silica content (part by mass) ($B_2$) | 5 | 5 | 5 | 5 | 5 | 5 |
| Inequality (8) $B_2$ / $B_1$ | 0.20 | 0.20 | 0.20 | 0.20 | 0.20 | - |
| Chipping resistance index | 100 | 98 | 94 | 86 | 94 | 84 |

Table 3

| Tire (three-layer tread) | | | | | | | |
|---|---|---|---|---|---|---|---|
| | Example | | | | | | Comparative example |
| | 12* | 13* | 14* | 15 | 16 | 17 | 7 |
| Tread first layer | a1 | a2 | a3 a4 | a4 | a5 | a6 | a9 |
| Thickness (mm) (H) | 17.2 | 17.2 | 17.2 | 17.2 | 17.2 | 17.2 | 17.2 |
| Depth of sipe (mm) (D) | 2.0 | 2.0 | 2.0 | 2.0 | 2.0 | 2.0 | 17.2 |
| Inequality (1) D / H | 0.12 | 0.12 | 0.12 | 0.12 | 0.12 | 0.12 | 1.00 |
| CB content (part by mass) ($A_1$) | 25 | 25 | 41 | 41 | 41 | 41 | 25 |
| Silica content (part by mass) ($B_1$) | 25 | 25 | 8.5 | 8.5 | 8.5 | 8.5 | 25 |
| Inequality (2) $B_1 / (A_1 + B_1)$ | 0.50 | 0.50 | 0.17 | 0.17 | 0.17 | 0.17 | 0.50 |
| Land ratio (%) (C) | 85 | 85 | 85 | 85 | 85 | 85 | 85 |
| Inequality (3) $A_1 \times C / 1000$ | 2.13 | 2.13 | 3.49 | 3.49 | 3.49 | 3.49 | 2.13 |
| Inequality (4) $A_1 / (D / H)$ | 2.9 | 2.9 | 4.8 | 4.8 | 4.8 | 4.8 | 25.0 |
| Inequality (5) $GW_{CE} / GW_{SH}$ | 0.75 | 0.75 | 0.75 | 0.75 | 0.75 | 0.75 | 0.75 |
| Inequality (6) $W_{SH} / TW$ | 0.48 | 0.48 | 0.48 | 0.48 | 0.48 | 0.48 | 0.48 |
| Rubber hardness | 62 | 63 | 66 | 66 | 67 | 68 | 64 |
| Tread middle layer | b | b | b | b | b | b | b |
| Thickness (mm) | 2 | 2 | 2 | 2 | 2 | 2 | 2 |
| Tread second layer | c | c | c | c | c | c | c |
| Thickness (mm) | 3 | 3 | 3 | 3 | 3 | 3 | 3 |
| CB content (part by mass) ($A_2$) | 35 | 35 | 35 | 35 | 35 | 35 | 35 |
| Inequality (7) $A_2 / A_1$ | 1.40 | 1.40 | 0.85 | 0.85 | 0.85 | 0.85 | 1.40 |
| Silica content (part by mass) ($B_2$) | 5 | 5 | 5 | 5 | 5 | 5 | 5 |
| Inequality (8) $B_2 / B_1$ | 0.20 | 0.20 | 0.59 | 0.59 | 0.59 | 0.59 | 0.20 |
| Chipping resistance index | 114 | 122 | 142 120 | 156 | 152 | | 100 |
| Examples 12 to 14 are not according to the invention. | | | | | | | |

REFERENCE SIGNS LIST

| | |
|---|---|
| 1 | Tire |
| 2 | Tread surface |
| 3 | Tread |
| 4 | First layer |
| 5 | Second layer |
| 6 | Main groove |
| 7 | Center main groove |
| 8 | Shoulder main groove |
| 9 | Lateral groove |
| 10 | Block |
| 11 | Sipe |
| 12 | Sharrow groove |
| H | Thickness of first layer of tread |
| C | Tire center line |
| TW | Tread grounding width |
| $GW_{SH}$ | Groove width of shoulder main groove having minimum groove width |
| $GW_{CE}$ | Groove width of center main groove having maximum groove width |

WSH Total of maximum values of grounding width of each shoulder land part

**Claims**

1. A heavy-duty tire (1) comprising a tread part (3),

wherein the tread part (3) comprises

a first layer (4) constituting a tread surface (2), and
a second layer (5) located inside the first layer (4),

wherein the tread surface (2) comprises

a plurality of main grooves (6) extending continuously in a tire circumferential direction,
lateral grooves (9) extending from the plurality of main grooves (6) in a tire axial direction, and
blocks (10) partitioned off by the main grooves (6) and the lateral grooves (9),

wherein each of the blocks (10) comprises a sipe (11),
wherein, when a depth (mm) of the sipe (11) is referred to as D and a thickness (mm) of the first layer (4) is referred to as H, D and H satisfy the following inequality,

$$D / H \leq 0.95 \quad (1),$$

and
**characterized in that** a rubber composition constituting the first layer (4) comprises

a rubber component comprising an isoprene-based rubber,
a filler comprising carbon black and silica, and
a resin component.

2. The heavy-duty tire (1) of claim 1, wherein the right side of the inequality (1) is 0.80.

3. The heavy-duty tire (1) of claim 1 or 2, wherein the carbon black comprises carbon black having an average primary particle size of 19 nm or less.

4. The heavy-duty tire (1) of claim 3, wherein a content of the carbon black having an average primary particle size of 19 nm or less in the entire carbon black is 100% by mass.

5. The heavy-duty tire (1) of any one of claims 1 to 4, wherein, when a content (part by mass) of the carbon black based on 100 parts by mass of the rubber component in the rubber composition constituting the first layer (4) is referred to as $A_1$ and a content (part by mass) of the silica based on 100 parts by mass of the rubber component in the rubber composition constituting the first layer (4) is referred to as $B_1$, $A_1$ and $B_1$ satisfy the following inequality,

$$B_1 / (A_1 + B_1) < 0.50 \quad (2).$$

6. The heavy-duty tire (1) of claim 5, wherein the right side of the inequality (2) is 0.20.

7. The heavy-duty tire (1) of any one of claims 1 to 6, wherein the rubber composition constituting the first layer (4) further comprises sulfur, and a content of the sulfur based on 100 parts by mass of the rubber component is preferably 2.00 parts by mass or less.

8. The heavy-duty tire (1) of any one of claims 1 to 7, wherein, when a content (part by mass) of the carbon black based on 100 parts by mass of the rubber component in the rubber composition constituting the first layer (4) is referred to as $A_1$ and a land ratio (%) of the tread surface (2) of the tread part (3) is referred to as C, $A_1$ and C satisfy the following inequality,

$$A_1 \times C/1000 > 3.00 \quad (3).$$

**9.** The heavy-duty tire (1) of any one of claims 1 to 8, wherein, when a content (part by mass) of the carbon black based on 100 parts by mass of the rubber component in the rubber composition constituting the first layer (4) is referred to as $A_1$, $A_1$ and the D/H satisfy the following inequality,

$$A_1 / (D / H) > 250 \quad (4).$$

**10.** The heavy-duty tire (1) of any one of claims 1 to 9,

wherein the number of the plurality of main grooves (6) is three or more,
wherein, when a pair of main grooves (6) on the outermost sides in a tire width direction among the main grooves (6) is defined as shoulder main grooves (8) and the other main grooves (6) are defined as center main grooves (7), a groove width (mm) $GW_{SH}$ of a shoulder main groove (8) having a minimum groove width among the shoulder main grooves (8) and a groove width (mm) $GW_{CE}$ of a center main groove (7) having a maximum groove width among the center main grooves (7) satisfy the following inequality,

$$GW_{CE} / GW_{SH} < 1.00 \quad (5),$$

and
wherein, when land parts on the outside in the tire width direction being partitioned off by the pair of shoulder main grooves (8) are referred to as a pair of shoulder land parts, $W_{SH}$ that is a total (mm) of each of maximum values of grounding width of the pair of shoulder land parts and TW that is a tread grounding width (mm) satisfy the following inequality,

$$W_{SH} / TW < 0.50 \quad (6).$$

**11.** The heavy-duty tire (1) of any one of claims 1 to 10, wherein a rubber hardness at 23°C of the rubber composition constituting the first layer (4) is 62 to 72.

**12.** The heavy-duty tire (1) of any one of claims 1 to 11,

wherein each of the blocks (10) comprises a shallow groove (12) having a groove depth shallower than the groove depths of the main grooves (6), and
wherein the shallow groove (12) is open to at least one of the main grooves (6) and the lateral grooves (9) that are adjacent to the blocks (10).

**13.** The heavy-duty tire (1) of any one of claims 1 to 12, wherein, when a content (part by mass) of the carbon black based on 100 parts by mass of the rubber component in the rubber composition constituting the first layer (4) is referred to as $A_1$, a rubber composition constituting the second layer (5) comprises a rubber component comprising an isoprene-based rubber and a filler comprising carbon black, and a content (part by mass) of the carbon black based on 100 parts by mass of the rubber component in the rubber composition constituting the second layer (5) is referred to as $A_2$, $A_1$ and $A_2$ satisfy the following inequality,

$$A_2 / A_1 < 1.00 \quad (7)$$

(provided that $A_2$ is 20 or more).

**14.** The heavy-duty tire (1) of any one of claims 1 to 13, wherein, when a content (part by mass) of the silica based on 100 parts by mass of the rubber component in the rubber composition constituting the first layer (4) is referred to as $B_1$, a rubber composition constituting the second layer (5) comprises a rubber component comprising an isoprene-based rubber and a filler comprising silica, and a content (part by mass) of the silica based on 100 parts by mass of the rubber component in the rubber composition constituting the second layer (5) is referred to as $B_2$, $B_1$ and $B_2$ satisfy the following inequality,

$$B_2 / B_1 < 1.00 \quad (8)$$

(provided that $B_2$ is 3 or more).

## Patentansprüche

1. Schwerlastreifen (1), umfassend einen Laufstreifen (3),

   wobei der Laufstreifen (3) umfasst:

   eine erste Schicht (4), die eine Laufstreifenoberfläche (2) bildet, und
   eine zweite Schicht (5), die sich innerseits der ersten Schicht (4) befindet,

   wobei die Laufstreifenoberfläche (2) umfasst:

   eine Mehrzahl an Hauptrillen (6), die sich durchgehend in einer Reifenumfangsrichtung erstrecken,
   Querrillen (9), die sich von der Mehrzahl an Hauptrillen (6) in einer Reifenaxialrichtung erstrecken, und
   Blöcke (10), die durch die Hauptrillen (6) und die Querrillen (9) abgeteilt sind,

   wobei jeder der Blöcke (10) einen Einschnitt (11) umfasst,
   wobei, wenn eine Tiefe (mm) des Einschnitts (11) als D bezeichnet ist und eine Dicke (mm) der ersten Schicht (4) als H bezeichnet ist, D und H der folgenden Ungleichung genügen,

$$D / H \leq 0{,}95 \quad (1),$$

   und
   **dadurch gekennzeichnet, dass** eine Kautschukzusammensetzung, welche die erste Schicht (4) bildet, umfasst:

   eine Kautschukkomponente, die einen Isopren-basierten Kautschuk umfasst,
   einen Füllstoff, der Ruß und Siliziumdioxid umfasst, und
   eine Harzkomponente.

2. Schwerlastreifen (1) nach Anspruch 1, wobei die rechte Seite der Ungleichung (1) 0,80 beträgt.

3. Schwerlastreifen (1) nach Anspruch 1 oder 2, wobei der Ruß eine mittlere Primärpartikelgröße von 19 nm oder weniger aufweisenden Ruß umfasst.

4. Schwerlastreifen (1) nach Anspruch 3, wobei ein Gehalt des eine mittlere Primärpartikelgröße von 19 nm oder weniger aufweisenden Rußes in dem gesamten Ruß 100 Massen-% beträgt.

5. Schwerlastreifen (1) nach einem der Ansprüche 1 bis 4, wobei, wenn ein Gehalt (Massenteile) des Rußes, bezogen auf 100 Massenteile der Kautschukkomponente in der Kautschukzusammensetzung, welche die erste Schicht (4) bildet, als $A_1$ bezeichnet ist, und ein Gehalt (Massenteile) des Siliziumdioxids, bezogen auf 100 Massenteile der Kautschuckkomponente in der Kautschukzusammensetzung, welche die erste Schicht (4) bildet, als $B_1$ bezeichnet ist, $A_1$ und $B_1$ der folgenden Ungleichung genügen,

$$B_1 / (A_1 + B_1) < 0{,}50 \quad (2).$$

6. Schwerlastreifen (1) nach Anspruch 5, wobei die rechte Seite der Ungleichung (2) 0,20 beträgt.

7. Schwerlastreifen (1) nach einem der Ansprüche 1 bis 6, wobei die Kautschukzusammensetzung, welche die erste Schicht (4) bildet, zudem Schwefel umfasst, und ein Gehalt des Schwefels, bezogen auf 100 Massenteile der Kautschukkomponente, bevorzugt 2,00 Massenteile oder weniger beträgt.

**8.** Schwerlastreifen (1) nach einem der Ansprüche 1 bis 7, wobei, wenn ein Gehalt (Massenteile) des Rußes, bezogen auf 100 Massenteile der Kautschukkomponente in der Kautschukzusammensetzung, welche die erste Schicht (4) bildet, als $A_1$ bezeichnet ist, und ein Positivprofilanteil (%) der Laufstreifenoberfläche (2) des Laufstreifenteils (3) als C bezeichnet ist, $A_1$ und C der folgenden Ungleichung genügen,

$$A_1 \times C/1000 > 3{,}00 \qquad (3).$$

**9.** Schwerlastreifen (1) nach einem der Ansprüche 1 bis 8, wobei, wenn ein Gehalt (Massenteile) des Rußes, bezogen auf 100 Massenteile der Kautschukkomponente in der Kautschukzusammensetzung, welche die erste Schicht (4) bildet, als $A_1$ bezeichnet ist, $A_1$ und D/H der folgenden Ungleichung genügen,

$$A_1 / (D / H) > 250 \qquad (4).$$

**10.** Schwerlastreifen (1) nach einem der Ansprüche 1 bis 9,

wobei die Anzahl der Mehrzahl an Hauptrillen (6) drei oder mehr beträgt,
wobei, wenn ein Paar von Hauptrillen (6) auf den am weitesten außen liegenden Seiten in einer Reifenbreitenrichtung unter den Hauptrillen (6) als Schulterhauptrillen (8) definiert ist, und die anderen Hauptrillen (6) als Zentrumshauptrillen (7) definiert sind, eine Rillenbreite (mm) $GW_{SH}$ einer Schulterhauptrille (8), die unter den Schulterhauptrillen (8) eine minimale Rillenbreite aufweist, und eine Rillenbreite (mm) $GW_{CE}$ einer Zentrumshauptrille (7), die unter den Zentrumshauptrillen (7) eine maximale Rillenbreite aufweist, der folgenden Ungleichung genügen,

$$GW_{CE} / GW_{SH} < 1{,}00 \qquad (5),$$

und
wobei, wenn Positivprofilteile auf der Außenseite in der Reifenbreitenrichtung, die durch das Paar von Schulterhauptrillen (8) abgeteilt sind, als ein Paar von Schulterpositivprofilteilen bezeichnet sind, WSH, welches ein Gesamtbetrag (mm) von jedem der Bodenkontaktbreite-Maximalwerte des Paares von Schulterpositivprofilteilen ist, und TW, welches eine Laufstreifenbodenkontaktbreite (mm) ist, der folgenden Ungleichung genügen,

$$W_{SH} /TW < 0{,}50 \qquad (6).$$

**11.** Schwerlastreifen (1) nach einem der Ansprüche 1 bis 10, wobei eine Kautschukhärte bei 23°C der Kautschukzusammensetzung, welche die erste Schicht (4) bildet, 62 bis 72 beträgt.

**12.** Schwerlastreifen (1) nach einem der Ansprüche 1 bis 11,

wobei jeder der Blöcke (10) eine flache Rille (12) umfasst, die eine Rillentiefe aufweist, welche flacher ist als die Rillentiefen der Hauptrillen (6), und
wobei die flache Rille (12) zu mindestens einer der Hauptrillen (6) und der Querrillen (9), die den Blöcken benachbart sind, offen ist.

**13.** Schwerlastreifen (1) nach einem der Ansprüche 1 bis 12, wobei, wenn ein Gehalt (Massenteile) des Rußes, bezogen auf 100 Massenteile der Kautschukkomponente in der Kautschukzusammensetzung, welche die erste Schicht (4) bildet, als $A_1$ bezeichnet ist, eine Kautschukzusammensetzung, welche die zweite Schicht (5) bildet, eine Kautschukkomponente umfasst, die einen Isopren-basierten Kautschuk und einen Ruß umfassenden Füllstoff umfasst, und ein Gehalt (Massenteile) des Rußes, bezogen auf 100 Massenteile der Kautschukkomponente in der Kautschukzusammensetzung, welche die zweite Schicht (5) bildet, als $A_2$ bezeichnet ist, $A_1$ und $A_2$ der folgenden Ungleichung genügen,

$$A_2 / A_1 < 1{,}00 \qquad (7)$$

(vorausgesetzt, dass $A_2$ 20 oder mehr beträgt).

**14.** Schwerlastreifen (1) nach einem der Ansprüche 1 bis 13, wobei, wenn ein Gehalt (Massenteile) des Siliziumdioxids, bezogen auf 100 Massenteile der Kautschukkomponente in der Kautschukzusammensetzung, welche die erste Schicht (4) bildet, als $B_1$ bezeichnet ist, eine Kautschukzusammensetzung, welche die zweite Schicht (5) bildet, eine Kautschukkomponente umfasst, die einen Isopren-basierten Kautschuk und einen Siliziumdioxid umfassenden Füllstoff umfasst, und ein Gehalt (Massenteile) des Siliziumdioxids, bezogen auf 100 Massenteile der Kautschukkomponente in der Kautschukzusammensetzung, welche die zweite Schicht (5) bildet, als $B_2$ bezeichnet ist, $B_1$ und $B_2$ der folgenden Ungleichung genügen,

$$B_2 / B_1 < 1{,}00 \qquad (8)$$

(vorausgesetzt, dass $B_2$ 3 oder mehr beträgt).

## Revendications

**1.** Pneu pour poids lourds (1) comprenant une partie bande de roulement (3), dans lequel la partie bande de roulement (3) comprend

une première couche (4) constituant une surface de bande de roulement (2), et
une deuxième couche (5) située à l'intérieur de la première couche (4),
dans lequel la surface de bande de roulement (2) comprend

une pluralité de rainures principales (6) s'étendant de manière continue dans une direction circonférentielle de pneu,
des rainures latérales (9) s'étendant à partir de la pluralité des rainures principales (6) dans une direction axiale de pneu, et
des blocs (10) compartimentés par les rainures principales (6) et les rainures latérales (9),

dans lequel chacun des blocs (10) comprend un siphon (11),
dans lequel, lorsqu'une profondeur (mm) du siphon (11) est référencée par D et une épaisseur (mm) de la première couche (4) est référencée par H, D et H satisfont l'inégalité suivante

$$D / H \leq 0{,}95 \qquad (1),$$

et
**caractérisé en ce qu'**une composition de caoutchouc constituant la première couche (4) comprend

un composant caoutchouc comprenant un caoutchouc à base d'isoprène,
une charge comprenant du noir de carbone et de la silice, et
un composant résine.

**2.** Pneu pour poids lourd (1) selon la revendication 1, dans lequel la partie droite de l'inégalité (1) est égale à 0,80.

**3.** Pneu pour poids lourd (1) selon la revendication 1 ou la revendication 2, dans lequel le noir de carbone comprend du noir de carbone ayant une taille particulaire primaire moyenne inférieure ou égale à 19 nm.

**4.** Pneu pour poids lourd (1) selon la revendication 3, dans lequel une teneur en noir de carbone ayant une taille particulaire primaire moyenne inférieure ou égale à 19 nm dans le noir de carbone entier est égale à 100% en masse.

**5.** Pneu pour poids lourd (1) selon l'une quelconque des revendications 1 à 4, dans lequel, lorsqu'une teneur (partie en masse) de noir de carbone sur la base de100 parties en masse de composant caoutchouc dans la composition de caoutchouc constituant la première couche (4) est référencée par $A_1$ et une teneur (partie en masse) de silice sur la base de 100 parties en masse de composant caoutchouc dans la composition de caoutchouc constituant la première couche (4) est référencée par $B_1$; $A_1$ et $B_1$ satisfont l'inégalité suivante

$$B_1/(A_1 + B_1) < 0{,}50 \qquad (2).$$

**6.** Pneu pour poids lourd (1) selon la revendication 5, dans lequel la partie droite de l'inégalité (2) est égale à 0,20.

**7.** Pneu pour poids lourd (1) selon l'une quelconque des revendications 1 à 6, dans lequel la composition de caoutchouc constituant la première couche (4) comprend en outre du soufre, et une teneur en soufre sur la base de 100 parties en masse de composant caoutchouc est de préférence inférieure ou égale à 2,00 parties en masse.

**8.** Pneu pour poids lourd (1) selon l'une quelconque des revendications 1 à 7, dans lequel, lorsqu'une teneur (partie en masse) de noir de carbone sur la base de 100 parties en masse de composant caoutchouc dans la composition de caoutchouc constituant la première couche (4) est référencée par $A_1$ et un ratio de contact avec le sol (%) de la surface de bande de roulement (2) de la partie bande de roulement (3) est référencé par C, $A_1$ et C satisfont l'inégalité suivante

$$A_1 \times C/1000 > 3{,}00 \qquad (3).$$

**9.** Pneu pour poids lourd (1) selon l'une quelconque des revendications 1 à 8, dans lequel, lorsqu'une teneur (partie en masse) de noir de carbone sur la base de 100 parties en masse de composant caoutchouc dans la composition de caoutchouc constituant la première couche (4) est référencée par $A_1$, $A_1$ et D/H satisfont l'inégalité suivante

$$A_1 / (D / H) > 250 \qquad (4).$$

**10.** Pneu pour poids lourd (1) selon l'une quelconque des revendications 1 à 9, dans lequel the nombre de rainures de la pluralité des rainures principales (6) est égal ou supérieur à trois,

dans lequel, lorsqu'une paire de rainures principales (6) sur les côtés le plus à l'extérieur dans une direction de largeur de pneu parmi les rainures principales (6) est définie comme étant les rainures principales (8) d'épaulement et les autres rainures principales (6) sont définies comme des rainures principales (7) de centre, une largeur de rainure (mm) $GW_{SH}$ d'une rainure principale d'épaulement (8) ayant une largeur de rainure minimale parmi les rainures principales (8) d'épaulement et une largeur de rainure (mm) $GW_{CE}$ d'une rainure principale du centre (7) ayant une largeur de rainure maximale parmi les rainures principales (7) du centre satisfont l'inégalité suivante

$$GW_{CE} / GW_{SH} < 1{,}00 \qquad (5),$$

et

dans lequel, lorsque des parties en contact avec le sol sur le côté extérieur dans la direction de largeur de pneu étant compartimentées par la paire de rainures principales d'épaulement (8) comme une paire de parties en contact avec le sol d'épaulement, $W_{SH}$ qui est un total (mm) de chacune des valeurs maximale de largeur de contact avec le sol de la paire de parties en contact avec le sol d'épaulement TW qui est une largeur de contact avec le sol (mm) de bande de roulement satisfont l'inégalité suivante

$$W_{SH} / TW < 0{,}50 \qquad (6).$$

**11.** Pneu pour poids lourd (1) selon l'une quelconque des revendications 1 à 10, dans lequel une dureté de caoutchouc à 23 °C de la composition de caoutchouc constituant la première couche (4) est de 62 à 72.

**12.** Pneu pour poids lourd (1) selon l'une quelconque des revendications 1 à 11,

dans lequel chacun des blocs (10) comprend une rainure peu profonde (12) ayant une profondeur de rainure moins profonde que les profondeurs de rainures des rainures principales (6), et
dans lequel la rainure peu profonde (12) est ouverte vers au moins une des rainures principales (6) et les rainures latérales (9) qui sont adjacentes vers les blocs (10).

**13.** Pneu pour poids lourd (1) selon l'une quelconque des revendications 1 à 12, dans lequel, lorsqu'une teneur (partie en masse) de noir de carbone sur la base de 100 parties en masse de composant caoutchouc dans la composition de caoutchouc réelle constituant la première couche (4) est référencée par $A_1$, une composition de caoutchouc constituant la deuxième couche (5) comprend un composant caoutchouc comprenant un caoutchouc à base

d'isoprène et une charge comprenant du noir de carbone, et une teneur (partie en masse) de noir de carbone sur la base de 100 parties en masse de composant caoutchouc dans la composition de caoutchouc constituant la deuxième couche (5) est référencée par $A_2$, $A_1$ et $A_2$ satisfont l'inégalité suivante,

$$A_2/A_1 < 1{,}00 \qquad (7)$$

(à condition que $A_2$ soit égal ou supérieur à 20).

**14.** Pneu pour poids lourd (1) selon l'une quelconque des revendications 1 à 13, dans lequel,
lorsqu'une teneur (partie en masse) de silice sur la base de 100 parties en masse de composant caoutchouc dans la composition de caoutchouc constituant la première couche (4) est référencée par $B_1$, une composition de caoutchouc constituant la deuxième couche (5) comprend un composant caoutchouc comprenant un caoutchouc à base d'isoprène et une charge comprenant de la silice, et une teneur (partie en masse) de silice sur la base de 100 parties en masse de composant caoutchouc dans la composition de caoutchouc constituant la deuxième couche (5) est référencée $B_2$, $B_1$ et $B_2$ satisfont l'inégalité suivante,

$$B_2/B_1 < 1{,}00 \qquad (8)$$

(à condition que $B_2$ soit égal ou supérieur à 3).

FIG.1

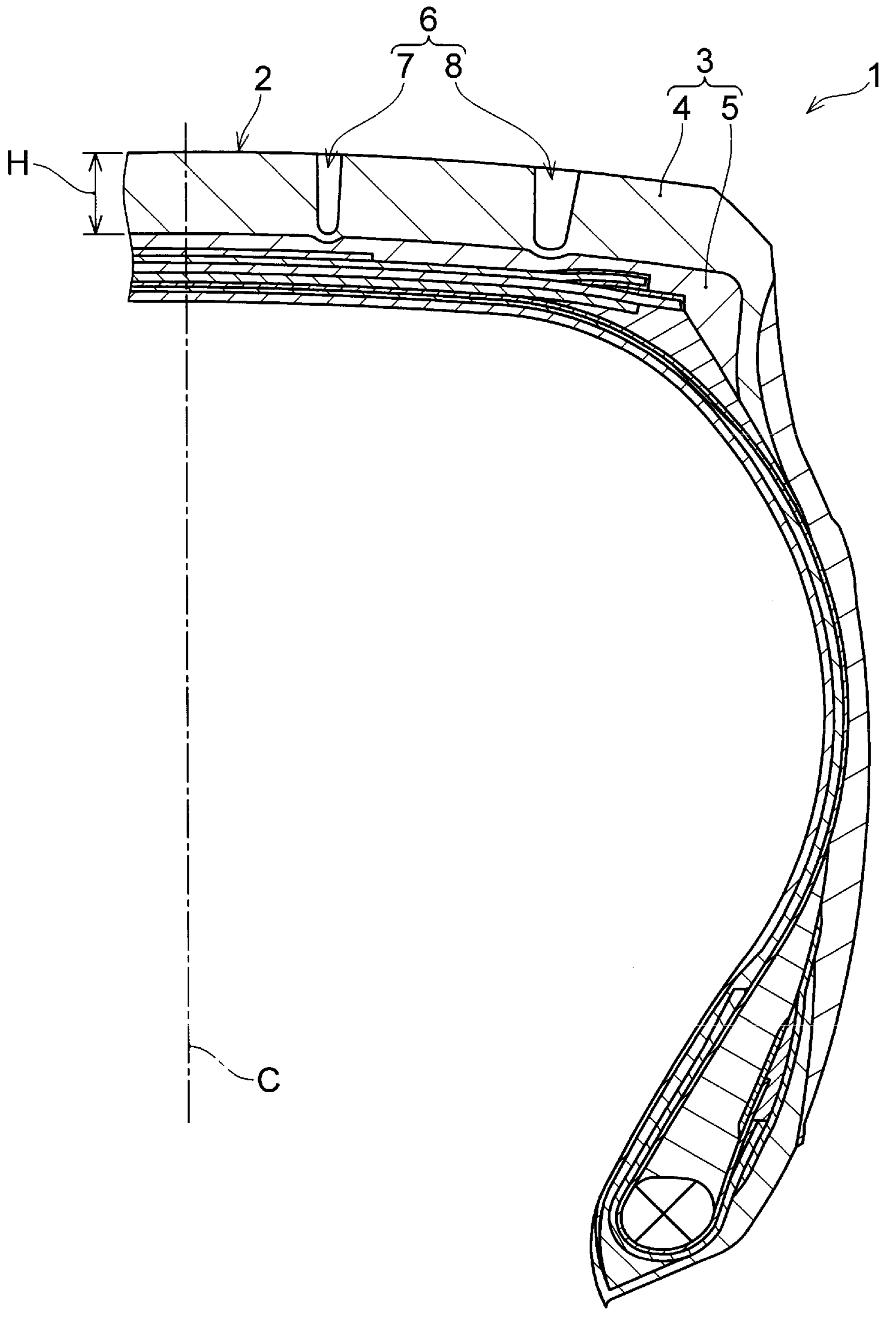

FIG. 2

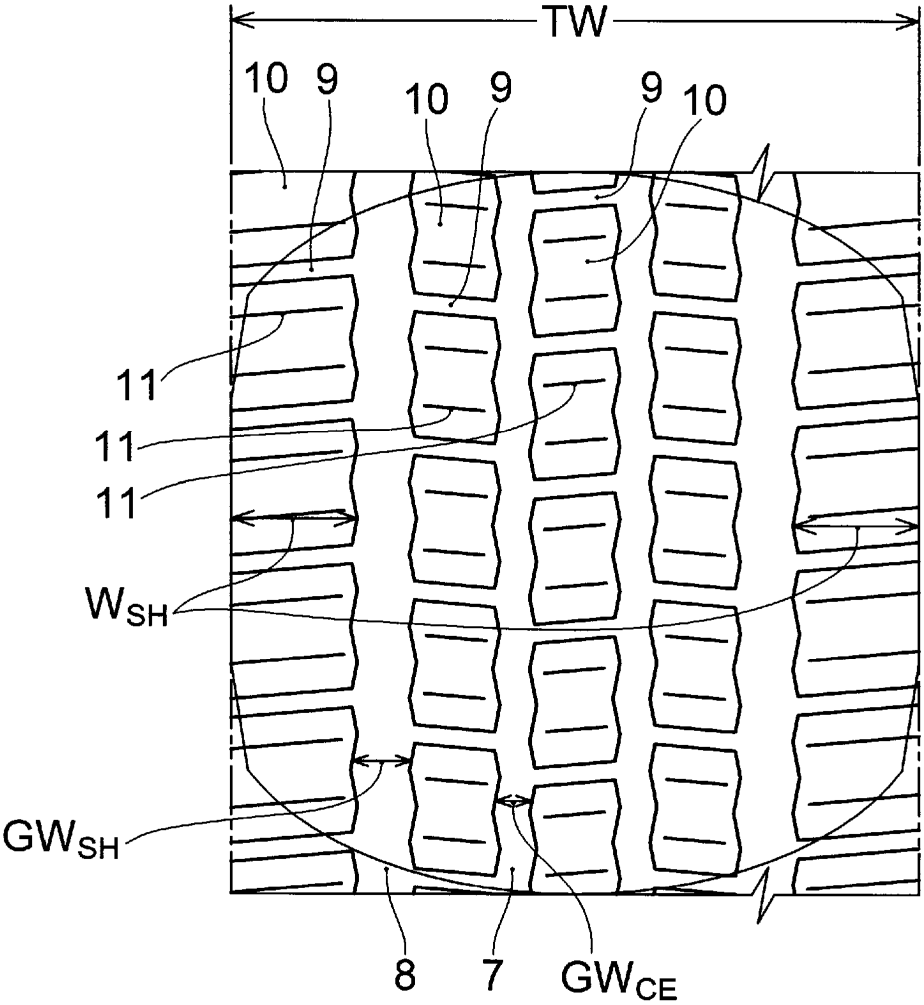

FIG. 3

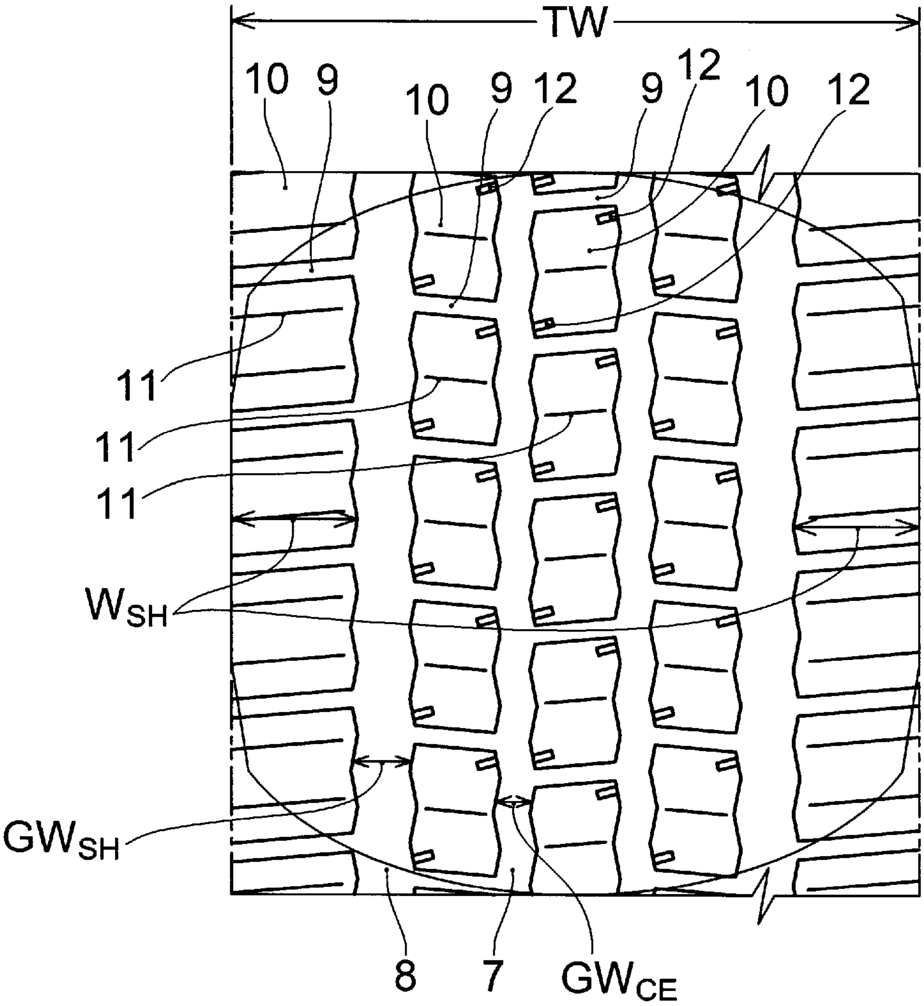

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009096919 A
- US 2021178828 A1
- JP H05254314 A
- EP 0540340 A2